# EUROPEAN PATENT SPECIFICATION

(11) **EP 0 626 989 B1**
(45) Date of publication and mention of the grant of the patent: **23.04.1997**
(21) Application number: 92922526.6
(22) Date of filing: 02.10.1992
(51) Int. Cl.: C10G 5/04

(54) **ABSORPTION PROCESS FOR ETHYLENE AND HYDROGEN RECOVERY**
ABSORPTIONSVERFAHREN ZUR GEWINNUNG VON ÄTHYLEN UND WASSERSTOFF
PROCEDE D'ABSORPTION APPLIQUE A LA RECUPERATION D'ETHYLENE ET D'HYDROGENE

(30) Priority: 19.02.1992 US 836911; 31.08.1992 US 937156
(43) Date of publication of application: 07.12.1994
(73) Proprietor: ADVANCED EXTRACTION TECHNOLOGIES, INC., Houston, Texas 77060 (US); KINETICS TECHNOLOGY INTERNATIONAL CORPORATION, San Dimas, CA 91773 (US)
(72) Inventor: MEHRA, Yuv, R., The Woodlands, TX 77381 (US); LAM, Wilfred, K., Arcadia, CA 91007 (US); MULLINS, Don, W., Glendora, CA 91740 (US)
(74) Representative: Dost, Wolfgang, Dr.rer.nat., Dipl.-Chem.
(86) International application number: PCT/US92/08390
(87) International publication number: WO 93/17081

(56) References cited:
- US-A- 4 743 282
- US-A- 5 019 143
- EUROPEAN CHEMICAL NEWS 14 October 1991, page 26 'KTI/AET OFFER CRACKER DESIGN FOR THE FUTURE'

## Description

This invention relates to treating hydrocarbon gases, such as cracked gases and refinery off-gases for recovering one or more desirable components.

Thermal cracking of hydrocarbon feedstocks in pyrolysis furnaces for production of ethylene has been an established technology since the 1940's. The pyrolysis furnace gases were cooled, compressed, sweetened, dried and sent to the recovery section of an ethylene plant in which the first fractionation column was a front-end demethanizer operating at about -150°C. The demethanizer bottoms were fed to a deethanizer, and the demethanizer overhead, rich in hydrogen, was fed to a cryogenic unit which recovered additional ethylene from the fuel gas stream. A back-end acetylene removal system, such as a series of two acetylene reactors, was typically located between the deethanizer and the C2 splitter. A Methyl Acetylene and Propadiene Reactor was located between the depropanizer and the C3 splitter. This arrangement caused the production of large amounts of green oil, a polymer formed from olefins and diolefins, which was likely to freeze in the C2 splitter or accumulate in the ethane vaporizer. By processing overhead gases from a heat-pumped deethanizer or depropanizer, which is coupled with a front-end catalytic acetylene hydrogenation reactor, the green oil problem is eliminated.

Numerous processes are known in the solvent absorption art for isolation and recovery of olefins from cracked, refinery, and synthetic gases containing these unsaturated compounds. Some processes utilize specific paraffinic compounds as an absorption oil, and others utilize an aromatic absorption oil as a solvent within an absorber column or an absorber-stripper column having a reboiler.

U. S. 4,743,282 of Y. R. Mehra describes a process for treating cracked gases which have been compressed, cooled, sweetened, and dried to produce a C₂=+ hydrocarbons product, a methane-rich gas product, and a H₂-rich gas product by successive countercurrent extraction with two lean solvents in separate loops.

U. S. 4,832,718 of Y. R. Mehra teaches a method for hydrogen purification by countercurrently and successively extracting an olefins containing gas stream, at a pressure no greater than 3,448 kPa, in an ethylene extractor column with a solvent slip stream from at least one flashing stage and then with lean solvent in a methane extractor column.

U. S. 5,019,143 of Y. R. Mehra describes a continuous process for contacting a hydrogen off-gas stream, at any pressure, in a demethanizing-absorber column, having at least one reboiler, with a main stream of stripped physical solvent and then with a cleanup stream of lean solvent.

Hydrogen is present in large quantities in thermally or catalytically cracked gas streams or in refinery off-gases and is commonly associated with olefins, such as ethylene and propylene. In addition to hydrogen, these gases generally comprise methane, carbon monoxide, carbon dioxide, ethylene, ethane, acetylene, methyl acetylene, propadiene, propylene, propane, butadienes, butenes, butanes, C₅'s, C₆-C₈ non-aromatics, benzene, toluene, xylenes, ethyl benzene, styrene, C₉-204°C gasoline, 204+°C fuel oil, and water.

At the KTI Symposium conducted in The Netherlands on October 3, 1991, the inventors of the KTI/AET ethylene recovery process of this invention described the invention as incorporating a front-end heat-pumped depropanizer, followed by a fourth-stage compressor, a front-end selective catalytic acetylene hydrogenation reactor system, and a drying stage before feeding to an absorber-stripper column which absorbs the C₂'s and the C3's and produces an overhead which is fed to a small auto refrigerated (by means of an expander) demethanizer where essentially all the C₂'s are recovered. The rich solvent is fed to a solvent regenerator where the demethanized C₂'s and C₃'s are recovered as overhead product and the lean solvent is produced and returned to the absorber-stripper after heat recovery. No ethylene refrigeration is required. The C₂'s and C₃'s are further separated in a conventional deethanizer to produce a C₂ fraction and a C₃ fraction that are then processed in their respective super-fractionators to produce polymer grade ethylene and propylene products. Ethane and propane leaving their respective super-fractionators as bottom products are recycled and cracked to extinction in the pyrolysis furnaces.

This symposium was reported in European Chemical News, 14 October, 1991, page 26, but the article furnished very little information about the absorption portion of the process except for an approximate block flow diagram.

However, the process as described at the KTI Symposium does not provide a means for isolating and recovering even a portion of the large quantities of hydrogen which are typically present in thermally or catalytically cracked gases and in refinery off-gases. All of the hydrogen in such gases is discharged as a part of its fuel gas product. There is accordingly an additional need for a method and a means for recovering this hydrogen.

The present invention provides a process for recovering ethylene from a hydrocarbon gas stream as defined in claim 1.

This invention can begin with respect to ethylene recovery by treating a cooled, sweetened, and compressed hydrocarbon gas stream, containing hydrogen, methane, carbon monoxide, ethylene, ethane, acetylene, and the C₃ and heavier hydrocarbons characteristic of an ethylene plant cracked gas stream and/or a refinery off-gas stream, by passing it through a heat-pumped depropanizer column which is coupled with a front-end selective catalytic acetylene hydrogenation reactor system to produce a C₃-and-lighter overhead stream that is fed to the demethanizing absorber column as the feedstock gas stream.

Alternatively, treating can begin by passing the cooled, sweetened, and compressed hydrocarbon gas stream through a heat-pumped deethanizer column which is coupled with a front-end selective catalytic acetylene hydrogenation reactor system to produce a C₂-and-lighter overhead stream that is fed to the demethanizing absorber column as the feedstock gas stream.

By processing overhead gases from a heat-pumped deethanizer or depropanizer, which is coupled with a front-end catalytic acetylene hydrogenation reactor, in a demethanizing absorber column capable of recovering 75% to 95% of contained ethylene from the reactor effluent gases and subsequently processing the overhead gases from the demethanizing absorber column to recover the combined solvent and remaining 5% to 25% of ethylene in an auto refrigerated recovery unit, all of the desired objectives of this invention are realized with respect to ethylene recovery.

The process of this invention can be applied to all feedstocks for any conventional ethylene plant having a front-end deethanizer or a front-end depropanizer, but as described hereinafter, it is exemplified by using a full range naphtha feedstock for a plant with a front-end depropanizer.

The naphtha feedstock is vaporized and sent to the pyrolysis furnaces, and the furnace effluent is indirectly quenched in transfer-line exchangers before direct quench in the oil quench tower. Fuel oil fractions are produced from the quench system. Heat recovery from the hot furnace effluent is accomplished in the oil quench system by heat exchange with other process loads and generation of dilution steam.

The oil quench tower overhead is cooled further in the water quench system where the dilution steam is condensed. Heat is recovered from the circulating quench water by heat exchange with other process loads, especially the regeneration column reboiler load, so that there is an energy synergism within the overall system.

The cooled water quench tower overhead is compressed in three stages to an optimum pressure primarily governed by the operating pressure of the front-end depropanizer. At the cracked gas compressor third stage discharge, acid gases are removed by a combination of amine and caustic systems. The acid gas-free cracked gas is then dried before entering the fractionation section of the plant.

A low-pressure debutanizing stripper column is located in the compression train to remove C5 and heavier fractions from the cracked gas. No high-pressure stripper column is required in the compression train.

The process of this invention utilizes a front-end heat pumped depropanizer system coupled with a front-end selective catalytic acetylene hydrogenation reactor system. The front-end heat pumped depropanizer permits fractionation at low pressure and condensation at high pressure. Fouling is minimized when the depropanizer is operated at low pressure.

The energy for heat pumping of the depropanizer is provided by the fourth stage of the cracked gas compressor. At the compressor discharge, acetylene is selectively hydrogenated to ethylene in the front-end reactor system. In addition, heavier C₃ and C₄ acetylenes and diolefins contained in the depropanizer overhead are selectively hydrogenated to their respective olefins, resulting in overall olefin gains across the reactor system. No green oil is formed across this reactor system.

The acetylene-free C3-and-lighter portion of the cracked gas leaves the reactor and is dried in a dehydrator to remove trace quantities of moisture. This C3-and-lighter fraction leaves the depropanizer reflux drum and enters the solvent extraction system for recovery of C2-plus hydrocarbons.

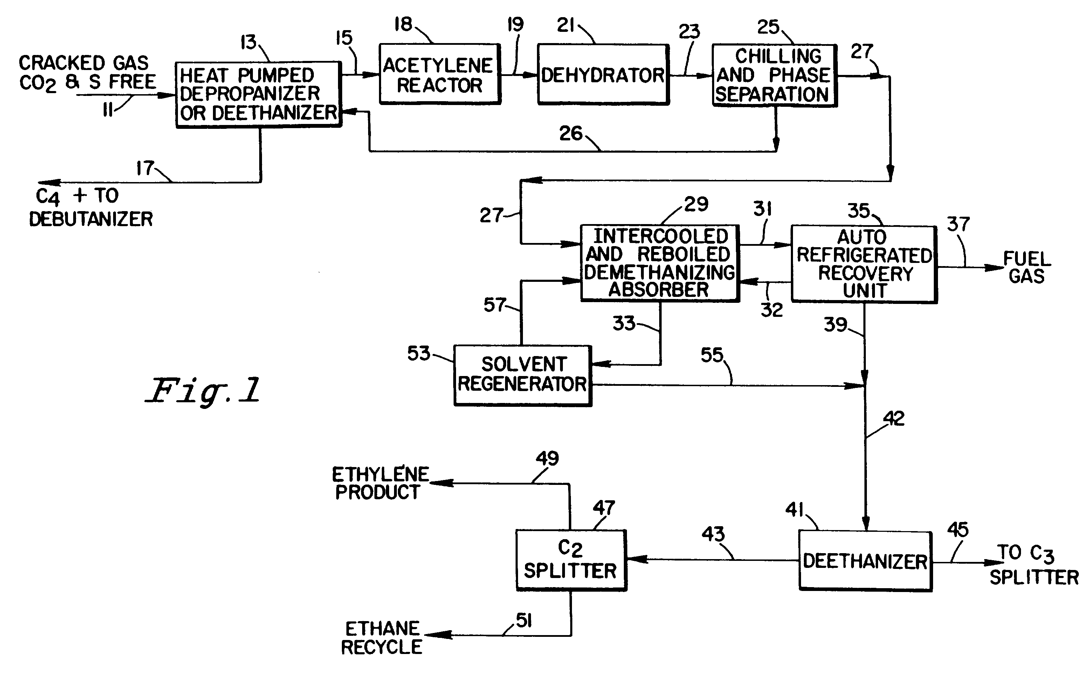

The C3-and-lighter fraction is fed to the demethanizing absorber column. The C2's and C3's are absorbed by the solvent while methane and lighter components, together with some ethylene, leave the top of the demethanizing absorber column. This overhead stream is fed to a small auto refrigerated recovery unit wherein essentially all the C2's are recovered. Additionally, any solvent present in the demethanizing absorber column overhead is recovered by a means not shown in Figures 1, 2 and 3 and is returned to the demethanizing absorber column. The expansion recovery system is auto refrigerated by means of cross exchanging various streams and utilizing turbo expanders and/or pressure let down valves thereby requiring no external refrigeration below -55°C.

The rich solvent from the bottom of the demethanizing absorber column is fed to a solvent regenerator column where the demethanized C2's and C3's are recovered as overhead product. The lean solvent is returned to the demethanizing absorber column after heat recovery.

The C2's and C3's are further separated in a conventional deethanizer column to produce a C2 and a C3 fraction. These two fractions are then processed in their respective super-fractionators to produce polymer grade ethylene and propylene products. Ethane and propane leaving their respective super-fractionators (i.e., C₂ and C₃ splitter columns) as bottom products are recycled and cracked to extinction in the pyrolysis furnaces. Back-end acetylene hydrogenation reactors are eliminated.

The C4-plus fraction leaving the bottom of the heat pumped deethanizer column or heat pumped depropanizer column is fed to a conventional debutanizer column to produce a C4 mix as overhead product. The bottom product from the debutanizer column is combined with the bottoms from the low pressure stripper column in the compression train and sent to the pyrolysis gasoline hydrotreater.

External refrigeration for the ethylene recovery process of this invention is supplied only by a propylene refrigeration compressor. No ethylene refrigeration is required by the ethylene recovery process of this invention. It should be understood that for the process of this invention any refrigerant capable of providing external refrigeration no lower than -55°C is useful.

This invention is characterized by selecting the hydrocarbon solvent from the group consisting of paraffinic hydrocarbons having 4 to 10 carbon atoms, naphthenic hydrocarbons having 4 to 10 carbon atoms, aromatic hydrocarbons selected from the group consisting of benzene, toluene, C₈-C₁₀ aromatic compounds having methyl, ethyl or propyl aliphatic groups specifically o-xylene, m-xylene, p-xylene, hemimellitene, pseudocumene, mesitylene, cumene, o-ethyltoluene, m-ethyltoluene, p-ethyltoluene, n-propylbenzene, isopropylbenzene, indane, durene, isodurene, prehnitene, crude xylenes, toluene transalkylation reaction effluents, extracted C₉ naphtha reformates, C₉ heart cuts of the reformates which are enriched in C₉ alkylbenzenes, C₇-C₉ alkyl aromatics, and mixtures thereof, and mixtures of the paraffinic hydrocarbons, the naphthenic hydrocarbons, and/or the aromatic hydrocarbons.

The invention is further characterized by intercooling and reboiling a demethanizing absorber column, to which a feedstock stream of the hydrocarbon gases is fed, and adjusting the lean solvent circulation rate thereto to produce an overhead gas stream and to absorb 75% to 99% of the ethylene present in the hydrocarbon gas stream into a bottom rich solvent stream that is fed to a solvent regenerator column that produces an overhead hydrocarbon stream of ethylene and heavier hydrocarbons and a lean solvent stream.

The invention is additionally characterized by feeding the overhead gas stream to an auto refrigerated recovery unit to produce a fuel gas stream containing as low as 0.1% of the ethylene present in the hydrocarbon gas stream, to recover 1% to 25% of the ethylene present in the feedstock gas stream as a component of a C₂-plus stream, and to recover excess solvent present in the overhead gas stream and then recycling the excess solvent to the demethanizing absorber column.

The overhead hydrocarbon stream of ethylene and heavier hydrocarbons is combined with the C₂-plus stream to produce a combined ethylene-rich stream that is fed to a deethanizer column to produce a bottom stream of propylene and heavier hydrocarbons and an overhead stream of ethylene and ethane.

The overhead stream of ethylene and ethane is fed to a C₂ splitter column to produce a bottom stream of ethane and an overhead stream of ethylene that amounts to at least 99% of the ethylene in the hydrocarbon gas stream.

This process for recovering ethylene is equally as useful for treating refinery off-gases as it is for treating cracked gases because its versatility enables it to be readily adapted to the great variety of such refinery feeds.

As a practical matter, cracked gases and refinery off-gases invariably contain hydrogen so that the feedstock gas stream fed to the demethanizing absorber column and the overhead gas stream from the demethanizing absorber column contain hydrogen in addition to ethylene and heavier hydrocarbons.

When recovery of up to 50% of the hydrogen in the feedstock gas stream is desirable, the overhead gas stream is selectively split into a hydrogen portion stream and a fuel portion stream, the hydrogen portion stream being fed to a methane absorber column and the fuel portion stream being fed to the auto refrigerated recovery unit.

The methane absorber column produces an overhead hydrogen stream, containing up to 50% of the hydrogen in the feedstock gas stream, and a bottom rich solvent stream which is fed to the demethanizing absorber column.

When selectively recovering up to 50% of the hydrogen in the incoming feedstock gas stream, the solvent circulates as a single solvent loop, the circulation rate of which is determined by the C₂₊ content of the feedstock gas stream.

When recovery of 20% to 100% of the hydrogen in the feedstock gas stream is desirable, the overhead gas stream from the demethanizing absorber column is fed to a methane absorber column which produces a hydrogen stream, containing the 20% to 100% of the hydrogen in the feedstock gas stream, and a bottom rich solvent stream.

The bottom rich solvent stream from the methane absorber column is selectively split into an absorber portion stream and a stripper portion stream, the absorber portion stream being fed to the demethanizing absorber column and the stripper portion stream being fed to a methane stripper column.

The methane stripper column produces a bottom solvent stream which is recycled to the methane absorber column and an overhead stream which is fed to the auto refrigerated recovery unit.

When selectively recovering 20% to 100% of the hydrogen in the incoming hydrocarbon gas stream, solvent circulates as two solvent loops that comprise a minor solvent loop circulating through the methane absorber column, the demethanizing absorber column, and the solvent regenerator column and a major solvent loop circulating through the methane stripper column and the methane absorber column, the circulation rate of the minor solvent circulation loop being determined by the C₂-and-heavier content of the feedstock gas stream and the circulation rate of the major solvent circulation loop being determined by subtracting the flow rate of the bottom lean solvent stream produced by the solvent regenerator column from the total circulation rate required to absorb the contained methane in the overhead gas stream produced by the demethanizing absorber column.

In the slip stream embodiment the bottom lean solvent stream from the methane absorption column is selectively split into a methane portion stream and an ethylene portion stream, the ethylene portion stream being fed to the demethanizing absorber column and the methane portion stream being fed to the methane stripper column.

These two selective splits form a means for shifting an entire plant to recovering the desirable percentage of hydrogen, while changing only the composition of the fuel gas stream and without affecting the production and composition of the combined ethylene-rich stream.

When the cooled, sweetened, and compressed feedstock gas stream is a cracked gas stream, auto refrigeration is achieved through use of turbo expanders which in turn provide chilling for demethanization and recovery of up to 25% of the ethylene present in the hydrocarbon gas stream fed to the demethanizing absorber as the C₂-plus stream.

When the cooled, sweetened, and compressed hydrocarbon gas stream is a FCC refinery off-gas stream that additionally contains nitrogen and nitrogen oxides, auto refrigeration is provided through use of pressure let-down valves which in turn provide chilling to achieve the Joule-Thompson effect while limiting this chilling to a temperature no lower than -110°C whereby nitrogen oxides are prevented from condensing.

When the cooled, sweetened, and compressed feedstock gas stream contains hydrogen, methane, carbon monoxide, ethylene, ethane, and the C₃ and heavier hydrocarbons characteristic of a refinery off-gas stream but contains essentially no acetylene, it may be treated by a heat-pumped deethanizer or a heat-pumped depropanizer column without catalytic hydrogenation to produce an overhead C₂-and-lighter or C₃-and-lighter stream respectively, that is fed to the demethanizing absorber column as the feedstock gas stream.

Any solvent that is useful for absorbing hydrocarbons is suitable as the absorbent in the intercooled and reboiled demethanizing absorber and methane absorber columns of this invention.

The process of this invention is equally as useful for treating refinery off-gases as it is for treating cracked gases because its versatility enables it to be readily adapted to the great variety of such refinery feeds. Some refinery off-gases, for example, do not contain acetylene and can bypass the acetylene reactor, the dehydrator, and the chilling and phase separation unit.

With reference to Figures 1, 2, and 3, it should be understood that pipelines are in fact being designated when streams are identified hereinafter and that streams are intended, if not stated, when materials are mentioned. Moreover, flow-control valves, temperature regulatory devices, pumps, and the like are to be understood as installed and operating in conventional relationships to the major items of equipment which are shown in the drawings and discussed hereinafter with reference to the continuously operating process of this invention. All of these valves, devices, and pumps, as well as heat exchangers, accumulators, condensers, and the like, are included in the term, "auxiliary equipment". The term, "absorber", is conventionally employed for a gas/solvent absorbing facility, but when it is utilized in the process of this invention with a preferential physical solvent, it is considered to be an "extractor". An absorber is also to be understood as an absorption column, and a stripper is to be understood as a distillation column.

It should also be understood that "absorber-stripper" and "demethanizing absorber" refer to the same equipment and that "expansion recovery" and "auto refrigerated recovery unit" refer to the same equipment.

Figure 1 is a schematic flow diagram in which a demethanizing absorber receives gases from a heat-pumped depropanizer or a heat-pumped deethanizer and sends its overhead to a small auto refrigerated recovery unit which obviates essentially all losses of olefins and solvent.

Figure 2 is a schematic flow diagram of the slip stream embodiment for recovering up to 50% of the hydrogen in the overhead gas stream from a front-end heat pumped deethanizer or depropanizer column or from a refinery off-gas stream.

Figure 3 is a schematic flow diagram of the full stream embodiment for recovering 20% to 100% of the hydrogen in the same gas stream.

The process shown schematically in the flow schematic of Figure 1 comprises heat pumped deethanizer or depropanizer 13, acetylene reactor 18, dehydrator 21, chilling and phase separation system 25, intercooled and reboiled demethanizing absorber column 29, auto refrigerated recovery unit 35, solvent regenerator column 53, deethanizer column 41, and C2 splitter column 47.

Cracked inlet gas stream 11, which is dry and free of CO2 and sulfur-containing gases, is cooled and fed to depropanizer column 13 which has a reboiler and removes C₄₊ hydrocarbons as stream 17. When a deethanizer column 13 is used, stream 17 contains C₃₊ hydrocarbons. Its overhead stream 15 is fed to acetylene reactor 18. The reacted overhead stream 19 is fed to dehydrator 21, producing dried stream 23 which is fed to chilling and phase separation system 25. Liquid stream 26 is recycled from system 25 to depropanizer column 13. Gas stream 27 is fed to demethanizing absorber column 29.

Demethanizing absorber column 29 produces overhead stream 31, which is fed to auto refrigerated recovery unit 35, and bottom stream 33, which is fed to solvent regenerator column 53. Auto refrigerated recovery unit 35 produces a recovered solvent stream 32, which is recycled to demethanizing absorber column 29, a fuel gas stream 37, and a demethanized C₂-plus stream 39.

Regenerator column 53 produces bottom lean solvent stream 57, which is fed to the top of demethanizing absorber column 29, and overhead stream 55, which is combined with C₂-plus stream 39 and fed as stream 42 to deethanizer column 41. Bottom stream 45 from deethanizer column 41 is sent to a C₃ splitter column, and overhead stream 43 from deethanizer column 41 is fed to C₂ splitter column 47 which produces ethylene product stream 49 as its overhead and ethane recycle stream 51 as its bottoms. When a heat-pumped deethanizer column 13 is used in the schematic of this process, stream 42 by-passes deethanizer column 41 to enter C₂ splitter column 47.

The process of this invention provides a new method for keeping down solvent losses because demethanizing absorber column 29 intercepts the feedstock stream-minus-C₄₊s, removes the C₂s and C₃s therefrom, and sends substantially only the hydrogen and methane to its auto refrigerated recovery unit 35, thereby requiring cryogenic cooling of these gases but no condensation of any compounds except a minor portion (e.g., 11%) of the ethylene and a minuscule portion (e.g., 1%) of the propylene. Additionally, auto refrigerated recovery unit 35, functioning as a tail-end demethanizer and comprising a demethanizing column and either turbo expanders or Joule-Thompson valves, recovers all of the solvent so that merely a negligible amount (e.g., 0.008%) leaves the process with the propane stream for recycling to the cracking operation. No other solvent make-up is required.

Utilizing auto refrigerated recovery unit 35 as an expansion recovery system enables the process of this invention to avoid the high costs of maximizing solvent recovery and minimizing ethylene losses that have typically plagued absorption processes of the prior art, because with this invention process demethanizing absorber column 29 may recover merely a major portion of the ethylene (75% to 99%) and then depend upon the expansion recovery system to act as a scavenger for the remainder of the ethylene (25% to 1%) and any solvent accompanying it. This major portion of ethylene recovery through demethanizing absorber column 29 depends upon the specific plant economic situation, feedstock composition and costs, capital and operating cost factors, and the like.

### Example 1

The following Tables IA, IB, IC and ID furnish material balances in kgmoles per hour for 24 components of 19 streams, as identified in Figure 1, of the front-end depropanizing, front-end catalytic hydrogenation, and demethanizing absorption process of the invention for ethylene recovery from a cracked gas stream that is free of CO2 and sulfur compounds and prepared by cracking a full range naphtha feedstock. These 19 process streams are associated with depropanizer 13, acetylene reactor 19, dehydrator 21, chilling and phase separation 25, demethanizing absorber column 29, auto refrigerated recovery unit 35, deethanizer column 41, C₂ splitter column 47, and solvent regenerator column 53.

Inspection of Tables 1A through 1D reveals that depropanizer 13 removes in stream 17 most of the C₄₊ compounds received from streams 11 and 26. Acetylene reactor 18 removes all of the acetylene, reduces the amount of propadiene, removes most of the butadiene, and increases the amounts of ethylene, ethane, propene, and 1-butene. Because of this ethylene production and the very slight losses of ethylene in the fuel gas stream that is achieved by the process of this invention, the quantity of ethylene product is greater than the quantity of ethylene in incoming feedstock stream 11.

The reactivity of reactor 18 is highly significant because propadiene and particularly butadiene tend to polymerize within and clog demethanizing absorber column 29. As shown in Table 1A, reactor 18 reduces the amount of 1,3-butadiene from 9.34 kgmoles per hour in stream 15 to 0.93 kgmoles per hour in stream 19, a reduction achieved by the sequential arrangement of reactor 18 and demethanizing absorber column 29 that accomplishes a primary objective of this invention.

Returning to a review of the accomplishments of the invention as illustrated in Tables 1A through 1D for the example, dehydrator 21 removes any trace of water in stream 19 and essentially functions as insurance against the presence of moisture in stream 23. In recycle stream 26, chilling and phase separation system 25 removes 14% of the ethylene, 57% of the M-acetylene, 50% of the propadiene, 42% of the propene, 72% of the vinylacetylene, 35% of the 1,3-butadiene, 71% of the i-butene, and 72% of the 1-butene that arrive in dehydrated stream 23.

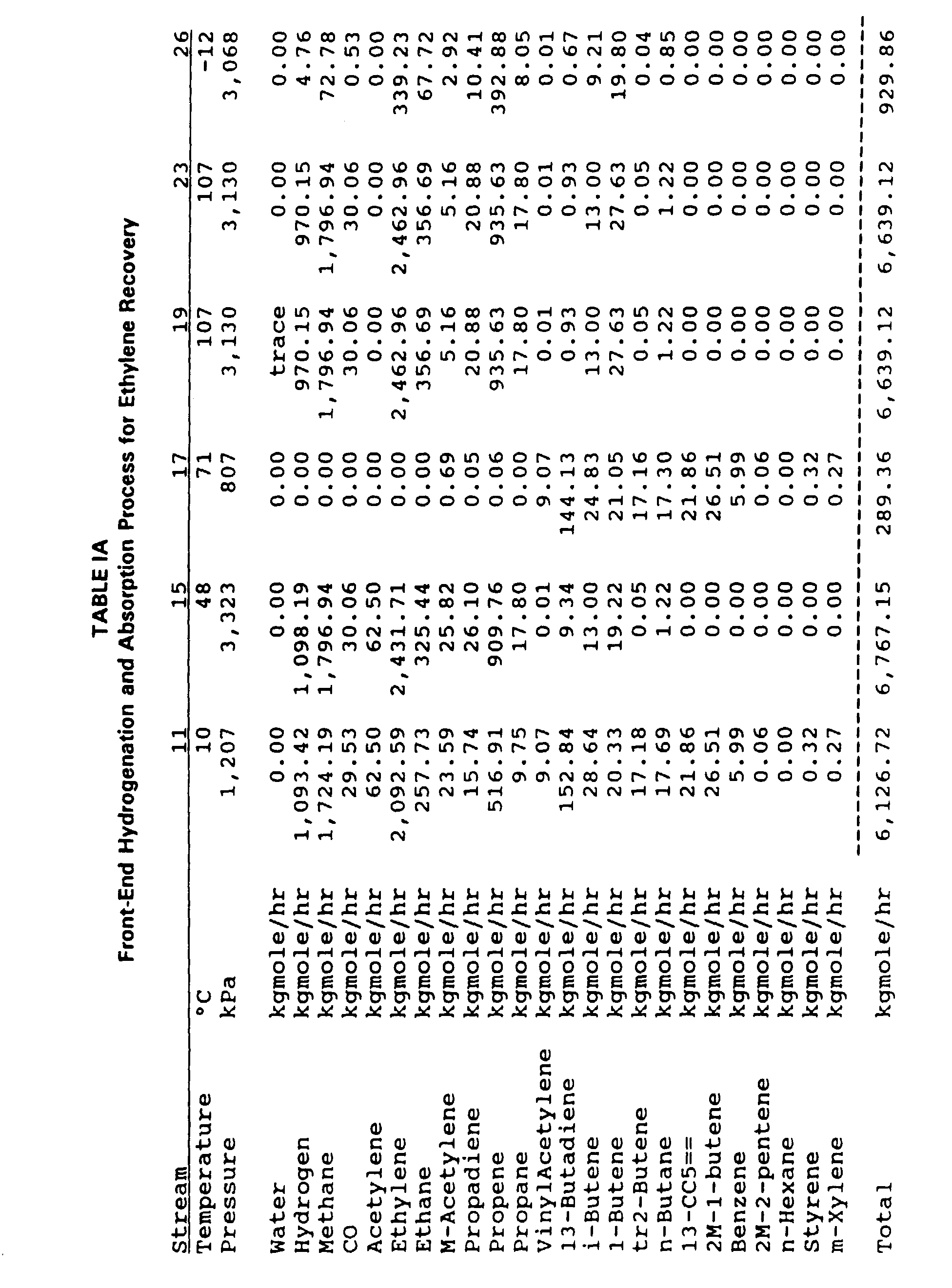

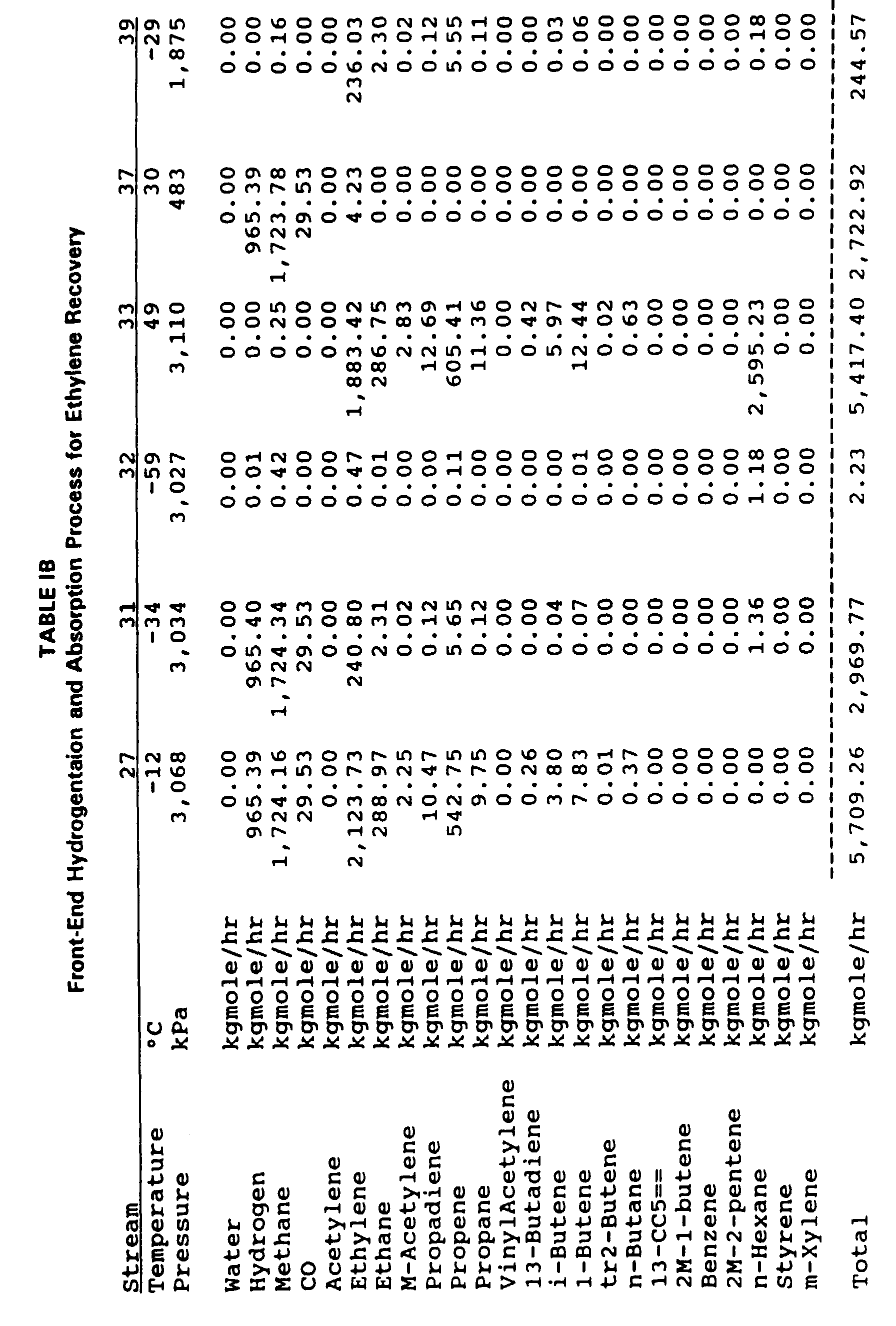

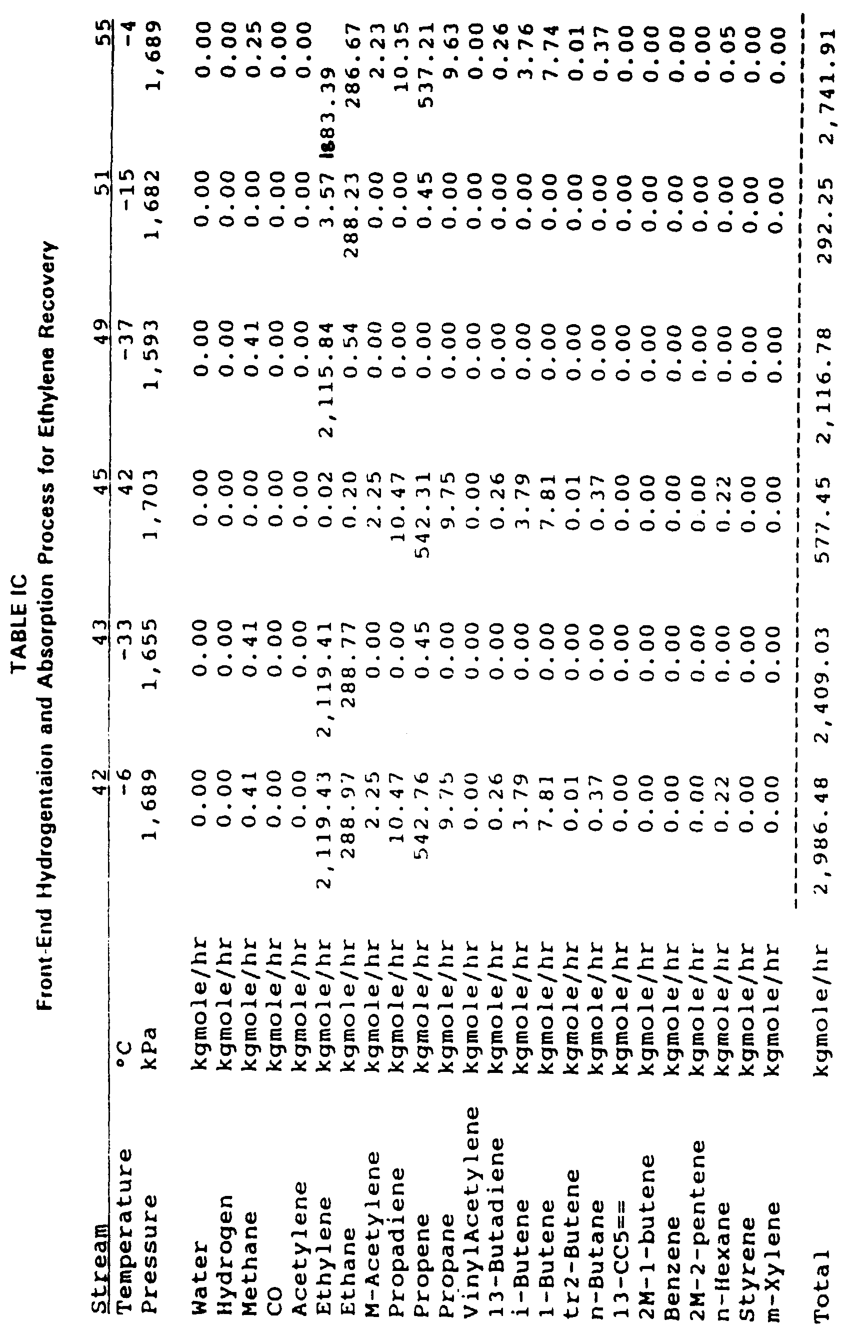

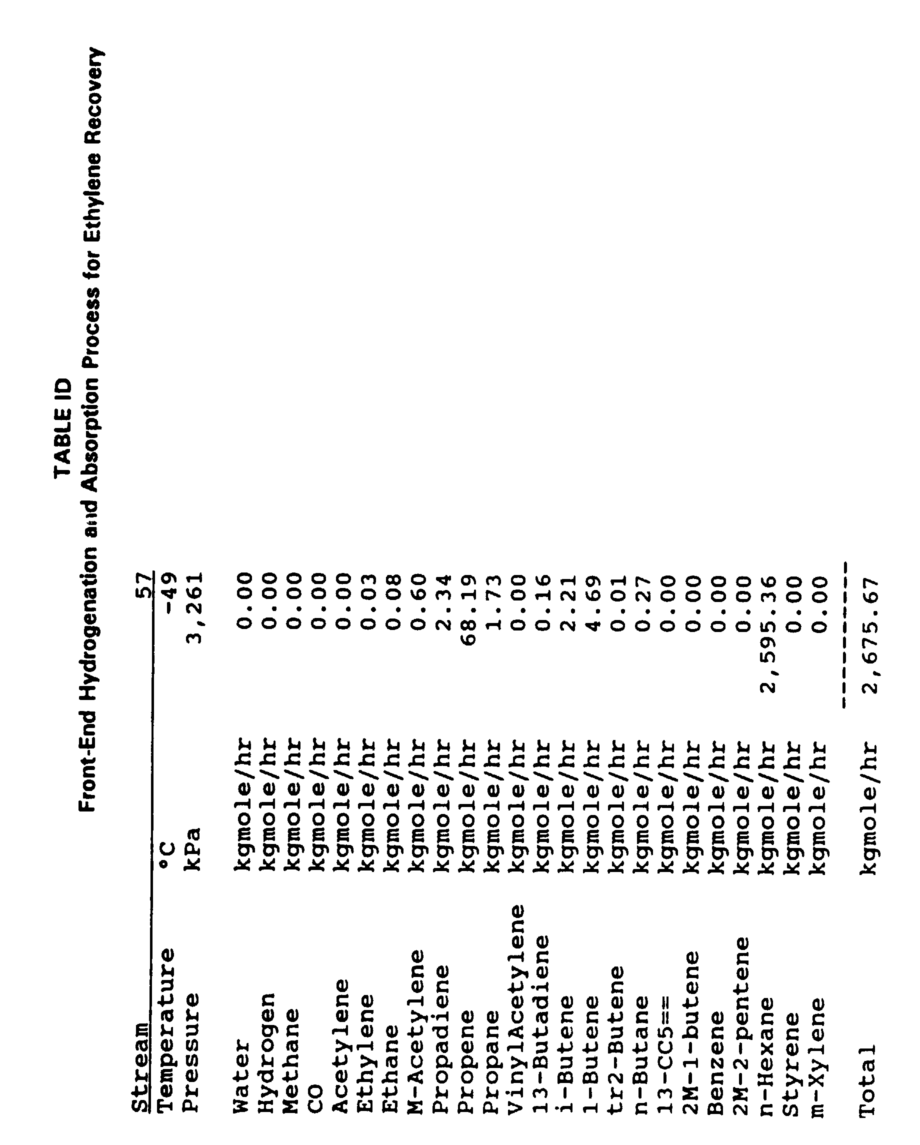

In rich solvent stream 33, demethanizing absorber 29 removes 89% of the ethylene, 99% of the m-acetylene, 99% of the propene, 99% of the 1,3-butadiene, 99% of the i-butene, and 99% of the 1-butene that arrives in streams 27, 32, and 57.

Such absorption results were achieved long ago in the prior art, but the overall process results were economically unbearable because of losses to the fuel gas stream. By passing this stream through auto refrigerated recovery unit 35, however, the process of this invention loses in fuel gas stream 37, as shown in Tables 1A through 1D, 1.76% of the incoming ethylene in stream 31 and 0.20% of the incoming ethylene in stream 11 and nothing of any other component other than the fuel gases: hydrogen, methane, and carbon monoxide, while keeping the required circulation of solvent, n-hexane, to 42% of the total incoming feed gas on a molal basis. In stream 39, auto refrigerated recovery unit 35 removes 98.0% of the ethylene, 99.6% of the ethane, and 99.2% of the propene arriving in stream 31, returning the remaining materials to demethanizing absorber column 29 in stream 32.

Demethanizing absorber column 29 is thereby operable in a relaxed manner, instead of being stretched to its limit, and consequently requires a relatively small capital investment and low operating expenses. Auto refrigerated recovery unit 35, receiving 48.5% of the incoming feed stream on a molal basis and 26.9% thereof on a weight basis, according to Example 1 as set forth in Tables 1A through 1D, and requiring no external cryogenic refrigeration for condensation of compounds in its bottoms stream (about 4% on a molal basis of the incoming hydrocarbon gas stream in this example), consequently also requires relatively little capital investment and surprisingly low operating expenses.

When it is additionally desirable to recover hydrogen, the overhead gas stream from the demethanizing absorber column can be selectively split into a hydrogen feed split portion and a fuel gas split portion to recover therefrom a portion of the contained hydrogen as product. Due to the splitting of the gas stream, the percentage recovery of hydrogen is accordingly limited. For the purpose of functionally distinguishing between the slip stream and the full stream embodiments of the process, by either of which hydrogen can be selectively produced, the slip stream embodiment will be described as recovering up to 50% of the hydrogen. It should be recognized, however, that this is a practical choice and not a process limitation.

It should further be recognized that the hydrogen purity increases with increasing solvent circulation for the same hydrogen recovery level. Correspondingly, for a given purity, hydrogen recovery can be increased by increasing solvent circulation.

For the slip stream hydrogen embodiment, the overhead stream from demethanizing absorber column can be selectively split into hydrogen feed and fuel gas split portions to produce up to 50% of the contained hydrogen as a product. More specifically, the hydrogen split portion is fed to a methane absorber column wherein hydrogen is produced as the overhead product stream and a bottom methane-rich solvent stream is produced that is fed to the top of the demethanizing absorber column. The remainder of the split overhead stream from the demethanizing absorber column is fed directly to an auto refrigerated recovery unit in which a fuel gas stream, containing methane and carbon monoxide, is separated from a bottom C₂/C₃ stream and from a small rich solvent side stream which is recycled to the demethanizing absorber column.

The bottom rich solvent stream from the demethanizing absorber column is fed to a solvent regenerator column which produces an overhead stream containing all C₂₊ hydrocarbon components and a bottom lean solvent stream which is fed to the top of the methane absorber column. This overhead C₂₊ stream is combined with the bottom C₂/C₃ stream from the auto refrigerated recovery unit to form an ethylene/propylene product stream for feeding to a deethanizer column and a C₂ splitter column.

The entire slip stream embodiment functions on one solvent loop, the circulation rate of which is determined by the C₂₊ content of the inlet gas to the demethanizing absorber column, beginning with the lean solvent entering at the top of the methane absorber column, then entering the demethanizing absorber column, followed by the solvent regenerator column which produces the lean solvent.

It has further been discovered, as a full stream hydrogen embodiment, that by initially processing the entire overhead stream of the demethanizing absorber column in the methane absorber column, its overhead stream can be efficiently produced as a hydrogen product stream. A hydrogen-poor rich solvent stream, as the bottom stream from the methane absorber column, is selectively split into minor and major portion streams; the minor split solvent stream is fed to the demethanizing absorber column and the major split portion stream is fed to a methane stripper column. The bottom stream from the methane stripper column is recycled as main solvent to the methane absorber column, and the overhead methane-rich and hydrogen-poor stream from the methane stripper column is fed to the auto refrigerated recovery unit which functions in the same way as for the slip stream embodiment. Contrary to the slip stream embodiment, however, wherein the overhead stream from the demethanizing absorber column is split between the methane absorber column and the auto refrigerated recovery unit, in the full stream embodiment, the bottom rich solvent stream from the methane absorber column is split between the demethanizing absorber column and the methane stripper column.

Purification in the solvent regenerator column of the rich solvent from the demethanizing absorber column is also done in the same way as in the slip stream embodiment, all lean solvent being recycled to the top of the methane absorber column and the bottom stream from the expansion recovery system and the overhead stream from the solvent regenerator column also being combined in the same way. The full stream embodiment functions on two solvent loops, the minor loop circulating through the methane absorber column, the demethanizing absorber column, and the solvent regenerator column, and the major loop circulating through the methane stripper column and the methane absorber column.

The flowrate for the minor solvent circulation loop is determined by the C₁₊ content of the inlet gas to the demethanizing absorber column. The flowrate of the major solvent circulation loop is determined by subtracting the minor lean solvent stream produced by the solvent regenerator column from the total circulation required to absorb the contained methane in the overhead of the demethanizing absorber column.

The slip stream embodiment can be used for selectively producing up to 50% of the incoming hydrogen, and the full stream embodiment can be used for selectively producing from 20% to 100% of the incoming hydrogen. With the methane absorber column in place and pipelines constructed for feeding any desired amounts of demethanizing absorber column overhead to the methane absorber column or to the auto refrigerated recovery unit and/or for sending the methane absorber column bottoms in part or entirely to the demethanizing absorber column or in part to the methane stripper column, and/or for sending the solvent regenerator column bottoms in part or entirely to the methane absorber column or in part to the demethanizing absorber column, it is feasible to shift the entire plant to production of hydrogen product at from 5%, for example, to 100% of the incoming hydrogen, depending upon market demand for hydrogen gas or the need for reformate hydrogen, hydrocracking hydrogen, and the like in a nearby refinery or a petrochemical plant while changing only the composition of the fuel gas product stream and without disturbing the C₂/C₃ product stream.

The means for performing this shift in hydrogen production in accordance with market demand and without affecting the production of olefins comprises:
(1) selective splitting of the overhead gas stream from the demethanizing absorber column between the methane absorber column and the auto refrigerated recovery unit, and
(2) selective splitting of the bottom lean solvent stream from the solvent regenerator column between the demethanizing absorber column and the methane absorber column.

As hydrogen recovery approaches zero, the first (gas) splitting approaches 100% flow to the auto refrigerated recovery unit, and the second (lean solvent) splitting also approaches 100% flow to the demethanizing absorber column. As hydrogen recovery approaches 100%, the first splitting approaches 100% flow to the methane absorber column and the second splitting approaches 100% flow to the methane absorber column.

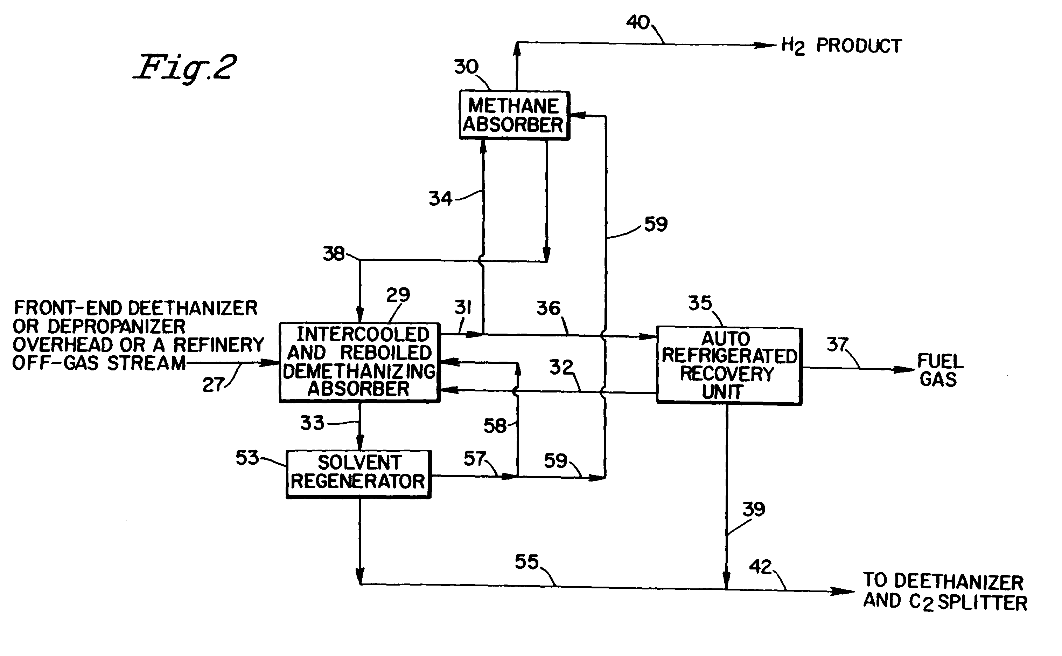

Figure 2 schematically represents the slip stream embodiment of this invention for production of selected percentages, up to 50%, of the hydrogen in feedstock stream 27 while maintaining full recovery of C₂ and C₃ olefins. This result is accomplished by utilizing intercooled and reboiled demethanizing absorber column 29, methane absorber column 30, solvent regenerator column 53, and auto refrigerated recovery unit 35. The process specifically comprises feeding front-end deethanizer or depropanizer overhead vapor or a refinery off-gas, such as from an FCC unit, as stream 27, which consists of sweetened, compressed, and dried saturated and unsaturated hydrocarbon gases, to demethanizing absorber column 29 which also receives streams 32 and 38. Its bottom stream 33 is fed to solvent regenerator column 53 which produces overhead stream 55 and bottom stream 57 of lean solvent.

At hydrogen recoveries up to 50%, overhead stream 31 from demethanizing absorber column 29 is selectively split into hydrogen split portion stream 34 and fuel gas split portion stream 36 in accordance with market considerations. Methane absorber column 30 receives at least a portion of bottom stream 57, as stream 59, from solvent regenerator column 53. The remaining portion, as stream 58, is fed directly to demethanizing absorber column 29, especially when operating at low recoveries of hydrogen.

Methane absorber column 30 produces overhead stream 40, as the hydrogen product stream of the process, and bottom stream 38 of rich solvent, which is fed directly to the top of demethanizing absorber column 29 when operating at relatively low hydrogen recoveries, herein defined as up to 50%.

Stream 36 is fed to auto refrigerated recovery unit 35 which produces stream 37 as the fuel gas product stream, stream 32 of recovered solvent which is recycled to demethanizing absorber column 29, and stream 39 of demethanized ethylene-plus hydrocarbons which is combined with overhead stream 55 from solvent regenerator 53 to form product stream 42 of demethanized C₂ and C₃ unsaturated and saturated hydrocarbons for feeding to deethanizer column 41 and then to C₂ splitter column 47.

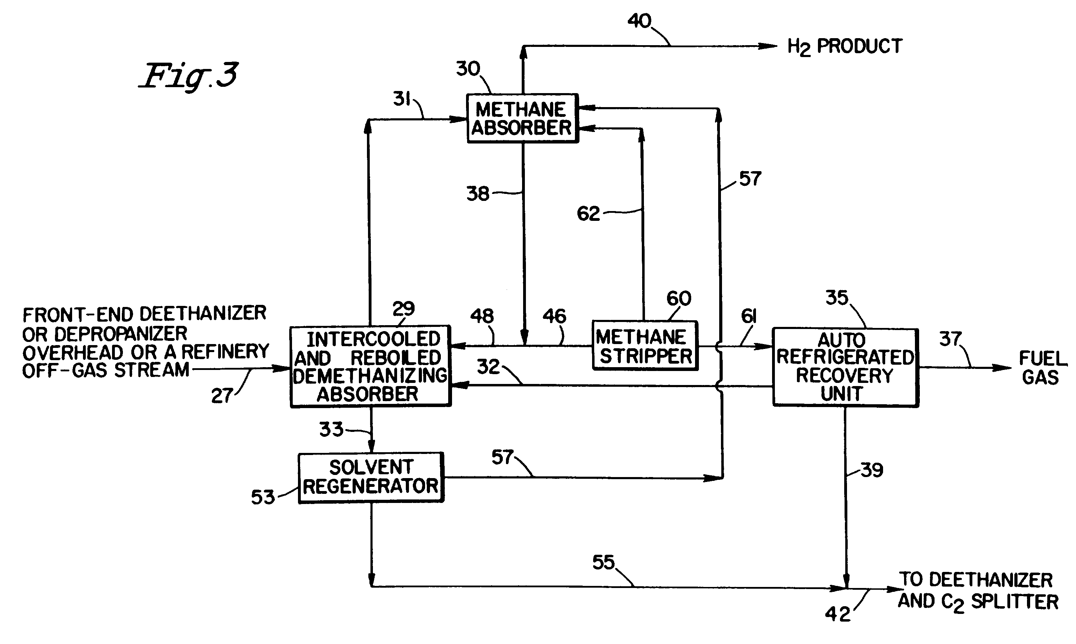

Figure 3 schematically represents the full stream embodiment of this invention for production of selected percentages, between 20% and 100%, of the hydrogen in incoming stream 27 while maintaining full recovery of C₂ and C₃ olefins. This result is accomplished by utilizing methane stripper column 60 in conjunction with the same demethanizing absorber column 29, methane absorber column 30, solvent regenerator column 53, and auto refrigerated recovery unit 35 as in the slip stream embodiment shown in Figure 2.

The full stream embodiment specifically comprises feeding front-end deethanizer or depropanizer overhead vapor or a refinery off-gas, such as from an FCC unit, as stream 27 to demethanizing absorber 29 which also receives streams 32 and 48. Bottom stream 33 is fed to solvent regenerator 53 which produces overhead stream 55 and bottom stream 57 of lean solvent.

Overhead stream 31 is not split but is fed directly to methane absorber 30 which also receives bottom stream 57 of lean solvent from solvent regenerator 53 and stream 62 of regenerated solvent from the bottom of methane stripper 60. Overhead stream 40 from methane absorber 30 leaves the unit as the hydrogen product.

Bottom rich solvent stream 38 is split into two portions: absorber portion stream 48 which is recycled to demethanizing absorber 29 and stripper portion stream 46 which is fed to methane stripper 60, the relative amount of stream 46 being determined according to absorption demands in methane absorber 30 and the amount of stream 48 being determined according to absorption demands in demethanizing absorber 29.

Overhead stream 61 from methane stripper 60 is fed to auto refrigerated recovery unit 35 which produces stream 37 as the fuel gas product, stream 32 of recovered solvent which is recycled to demethanizing absorber 29, and stream 39 of demethanized ethylene-plus hydrocarbons which is combined with overhead stream 55 from solvent regenerator column 53 to form product stream 42 of demethanized C₂ and C₃ unsaturated and saturated hydrocarbons for feeding to deethanizer column 41 and then to C₂ splitter column 47.

The process of this invention provides a new method for keeping down solvent circulation because demethanizing absorber 29 recovers about 75-99% of contained ethylene from feed stream 27 which is essentially free of C₄₊ hydrocarbons, removes only the C₂s and C₃ s therefrom, and sends substantially the hydrogen and methane to methane absorber 30, thereby requiring internal cryogenic cooling of only the remaining gases fed to auto refrigerated recovery unit 35 in order to first recover excess solvent as stream 32 and also to recover remaining ethylene, which amounts to 1-25% of the ethylene in the incoming feed gases, as demethanized stream 39.

Additionally, the demethanizing column within auto refrigerated recovery unit 35 recovers any remaining solvent which leaves the process in stream 42 and eventually is recycled with the ethane stream if a heat-pumped deethanizer is utilized or the propane stream if a heat-pumped depropanizer is utilized to the cracking operation. Since the paraffinic and naphthenic solvents used in the process are also considered feedstocks for an ethylene plant, any contained solvent in the recycle ethane or propane streams essentially provides additional ethylene from the cracking operation.

This major portion of ethylene recovery through demethanizing absorber 29 depends upon the specific plant economic situation, feedstock composition and costs, capital and operating cost factors, and the like.

Stream 38 to stream 46 to stream 62 forms a large solvent loop, the solvent therein by-passing demethanizing absorber 29 and regenerator 53. Methane stripper 60 may be composed of a fractionating column or multiple flashing stages or any combination thereof. The solvent in this additional loop is sufficiently regenerated in methane stripper 60 for the purpose of methane absorption and need not enter solvent regenerator 53. Even though all of the truly lean solvent from solvent regenerator 53 is being fed to methane absorber 30, in order to absorb the greatly increased amount of methane in stream 31, as shown in Figure 3 and as compared to the amount in stream 34 of Figure 2 for the slip stream embodiment, the large quantity of sufficiently lean solvent in bottom stream 62 represents considerable assistance for meeting this additional absorption demand.

The invention may be more fully understood by reference to the following Example 2 which refers to Figure 2 and Tables IIA, IIB and IIC and the following Example 3 which refers to Figure 3 and Tables IIIA, IIIB and IIIC. All following ratios and percentages, where applicable, are on a kgmole basis.

In these examples, n-pentane is the illustrative solvent, but it should be understood that any physical hydrocarbon solvent having 4 to 10 carbon atoms is suitable for use in the process of this invention. Moreover, any of the paraffinic, naphthenic, and lighter aromatic solvents but without limitations as to molecular weights and/or UOP characterization factors, are satisfactory for practicing this invention.

### Example 2

With overhead stream 31 being divided so that 21.24 percent is fed to methane absorber 30 as stream 34, the remainder being fed directly to auto refrigerated recovery unit 35 as stream 36, and with all of rich solvent stream 38 being fed to the top of demethanizing absorber 29, this slip stream embodiment recovers, in stream 40, 19.89% of the incoming hydrogen in stream 27 and 92.2% of the hydrogen entering methane absorber 30 in stream 34. The purity of the hydrogen in stream 40 is about 98 mol%. None of the 2,106.10 kgmoles/hr of hydrogen entering absorber 29 are lost to rich solvent stream 33.

Inspection of Tables IIA through IIC reveals that the selected splitting ratio for stream 31 of stream 36 to stream 34 is 3.7:1.0. It is also worth noting that absorber 29 is operated at 46°C at its bottom and at - 33°C at its top while handling 5,781.85 kgmoles/hr of feedstock, and recovering over 91% of ethylene present in feed stream 27 along with 2,563.64 kgmoles/hr of pure n-pentane, used herein as an illustration of one of several suitable solvents.

Continuing with the characteristics of the invention with respect to fuel gas product stream 37 as illustrated in Table IIA through IIC for this slip stream example, auto refrigerated recovery unit 35 recovers 95.63% of the ethylene present in stream 36 as stream 39 which is demethanized to contain 0.08 mol% methane. The overall solvent loss for the process of this example is 0.52 kgmoles/hr and exists in streams 40 and 42. No solvent is lost in stream 37 to the fuel gas system. It is of commercial importance that product stream 42 of C₂ and C₃ hydrocarbons contains only 231 parts per million by molar volume of methane in ethylene.

Recirculating solvent stream 57 is 97.00 mol% n-pentane. The ratio of pentane in solvent stream 57 to inlet gas feed stream 27, in order to have a total ethylene recovery of 99.84%, is 0.44 on a molar basis. For this example, solvent flow of stream 59 is identical to stream 57, and solvent flow in stream 58 is zero.

### Example 3

This example illustrates selective full stream recovery of hydrogen at a level of 100%. With all of overhead stream 31 being fed to methane absorber column 30 and with rich solvent stream 38 being split into stream 48 which is fed to demethanizing

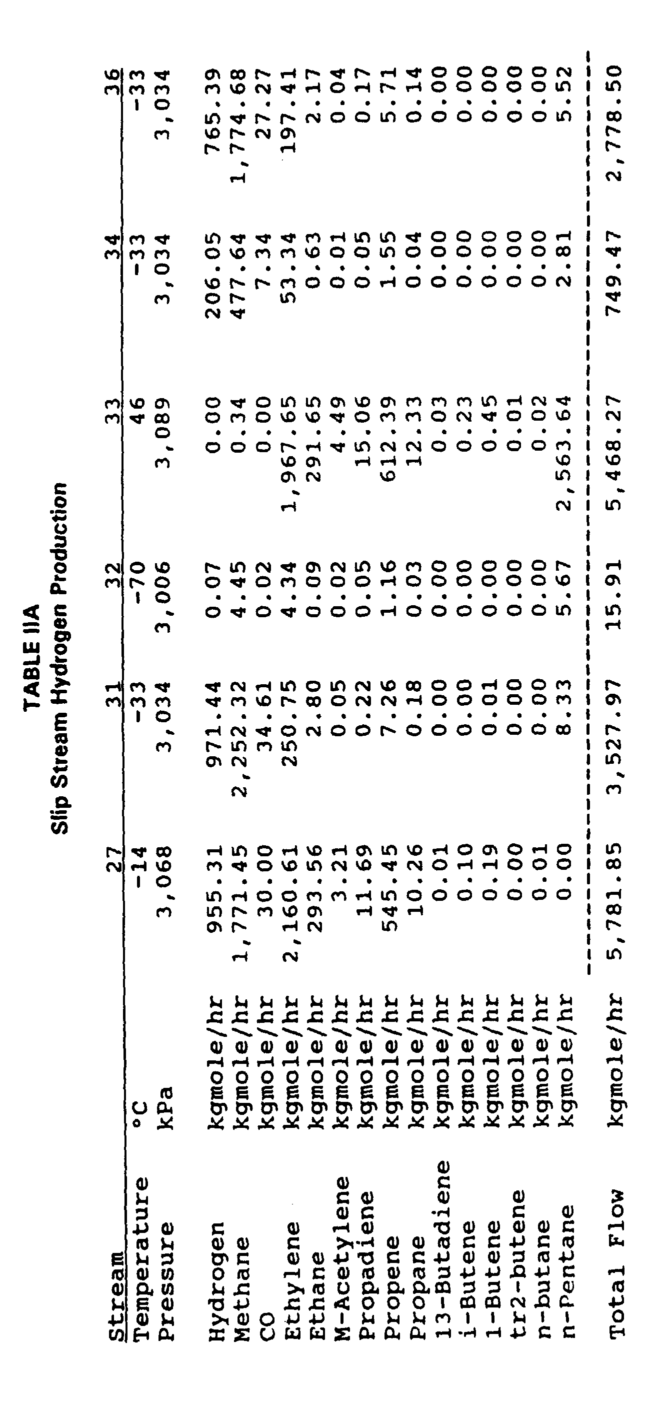

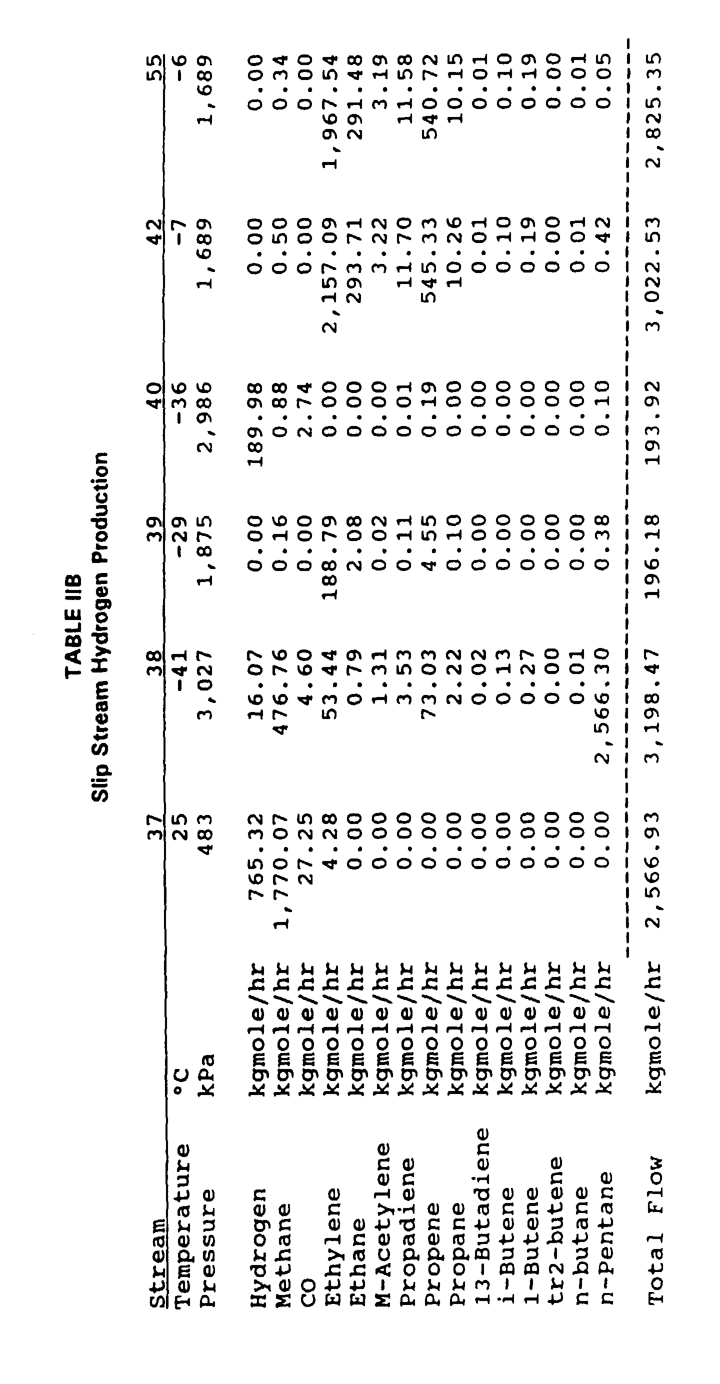

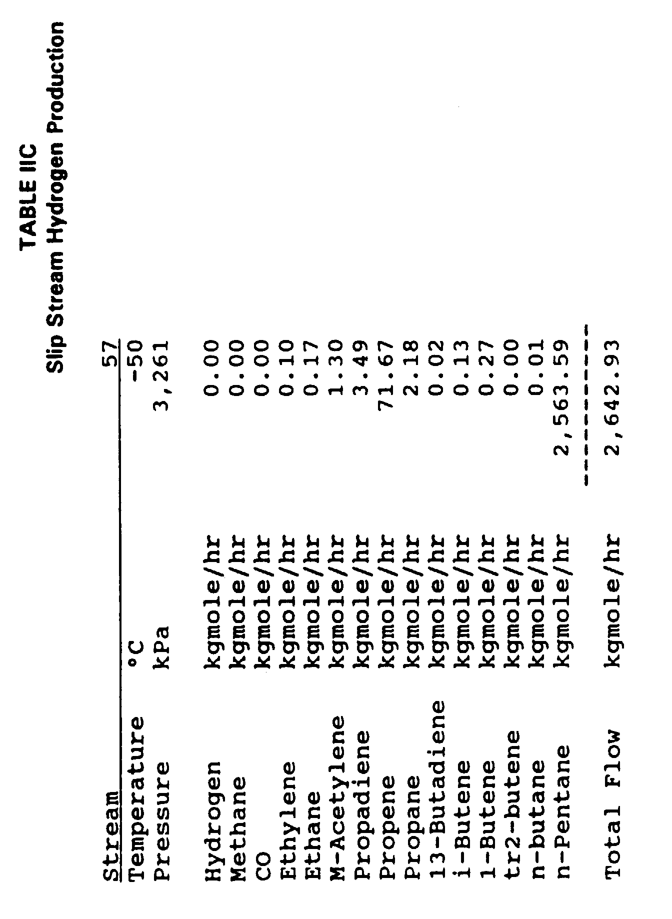

absorber column 29 and stream 46 which is fed to methane stripper column 60, this full stream embodiment recovers, in stream 40, 94.65% of the incoming hydrogen in stream 27 and 93.12% of the hydrogen entering methane absorber column 30 in stream 31. The hydrogen recovery is lower across methane absorber column 30 because stream 48 introduces additional hydrogen into demethanizing absorber column 29. The purity of the hydrogen in stream 40 is 80.15%.

Inspection of Tables IIIA through IIIC reveals that the selected splitting ratio for stream 38 into stream 46 and stream 48 is 3.5:1.0. It is also worth noting that demethanizing absorber column 29 is operated at -33°C at its top and at 53°C at its bottom while handling 5,696.89 kgmoles/hr of feedstock, and while utilizing 3,167.96 kgmoles/hr of n-pentane in demethanizing absorber column 29 to recover 97.4% of the ethylene in stream 27 as a component of stream 33. The ratio of n-pentane in stream 62 to n-pentane in stream 57 is 3.5:1.0. This split ratio is identical to the splitting ratio of rich solvent stream 38 into streams 48 and 46.

Continuing with the characteristics of the invention with respect to fuel gas product stream 37, as illustrated in Tables IIIA through IIIC for this full stream example, auto refrigerated recovery unit 35 allows only 0.22% of the ethylene in feed stream 27 to enter the fuel gas system through stream 37.

Recirculating solvent stream 57 is 97.00% pure solvent. On a molar basis, the solvent in stream 57 is 55.61% of the incoming materials in stream 27, and the entire process recovers about 99.7% of incoming ethylene into stream 42.

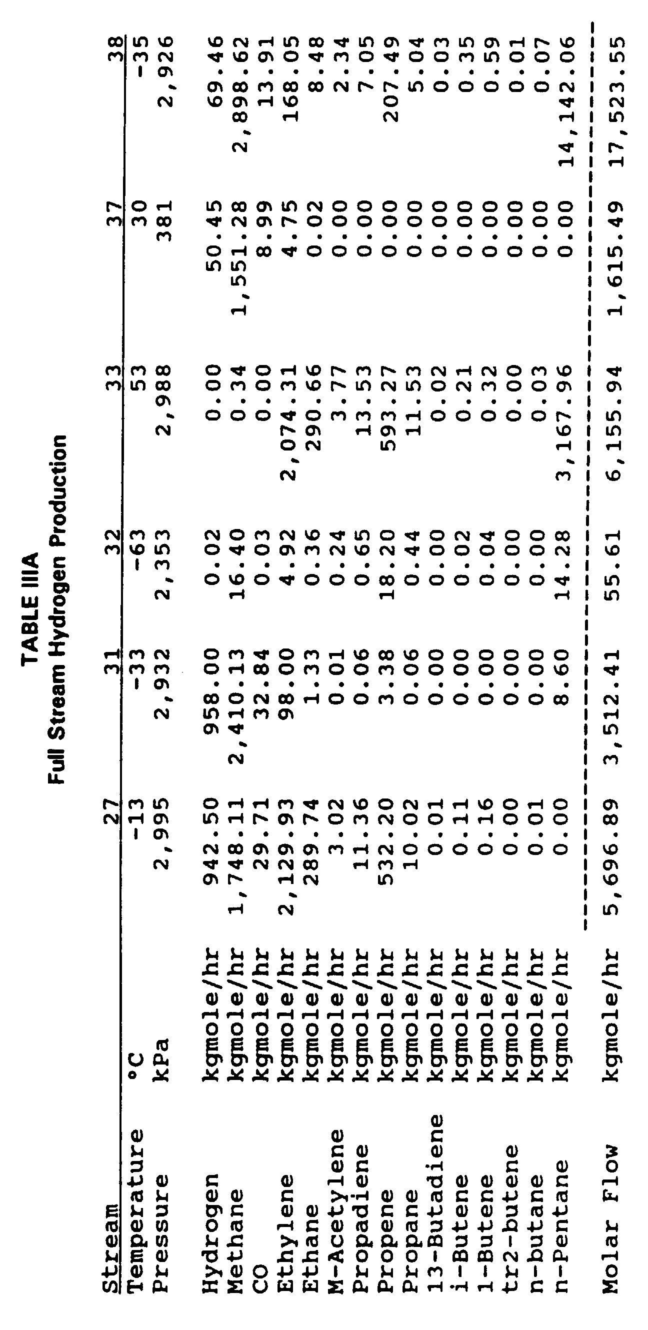

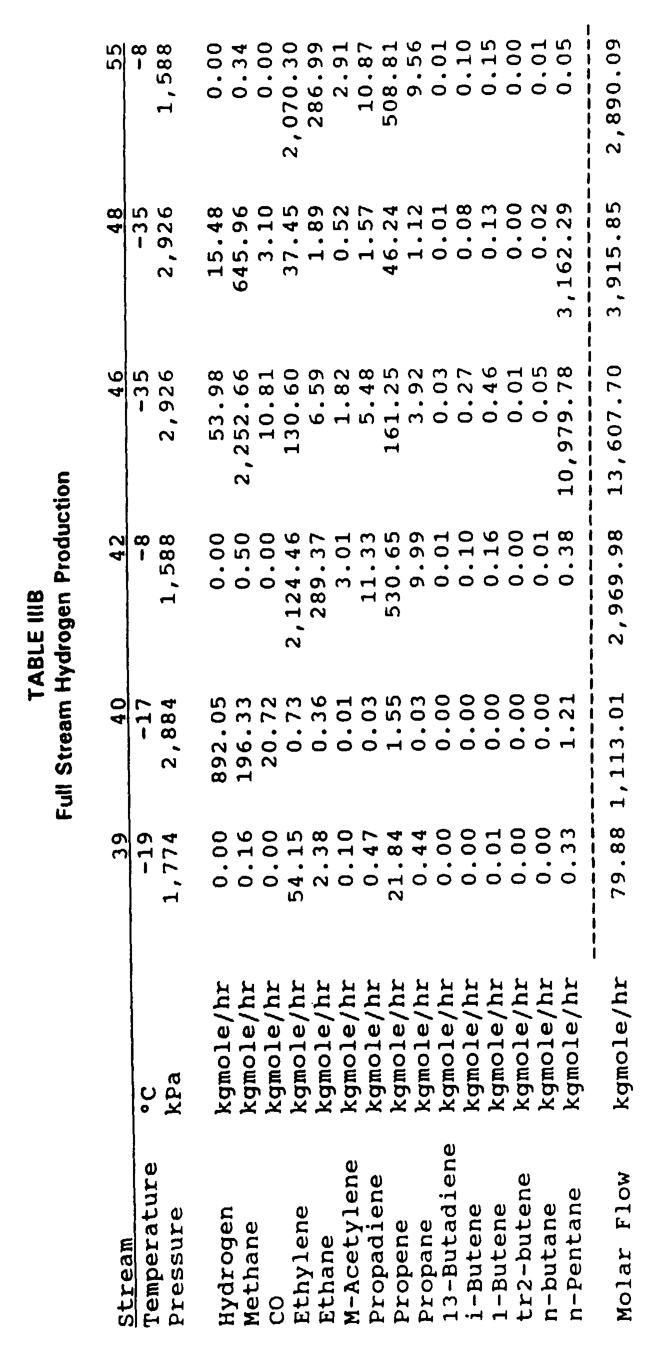

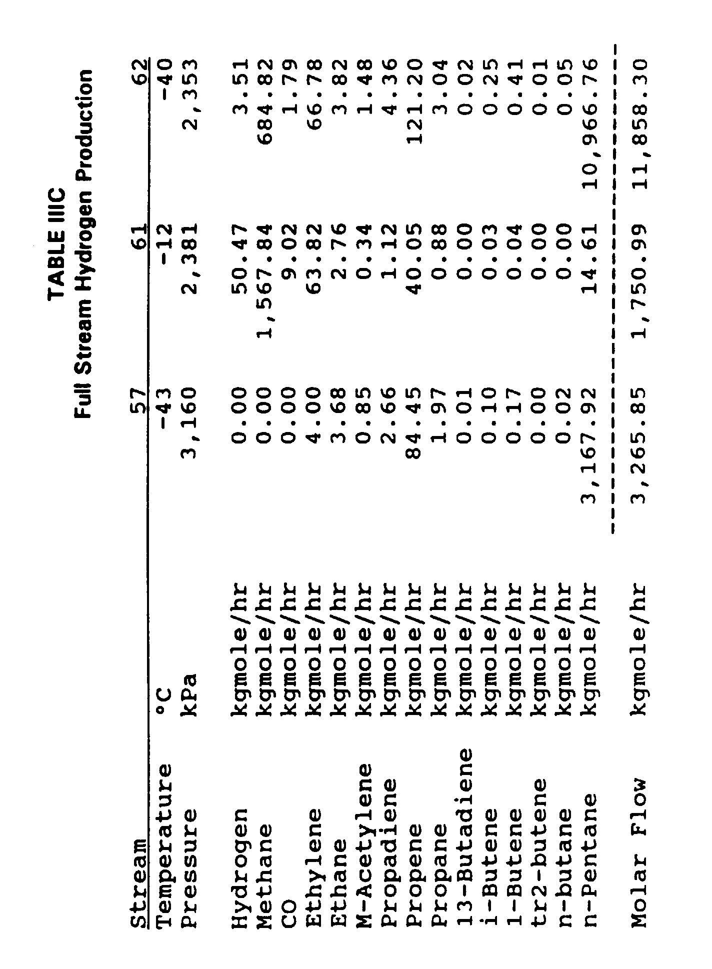

Auto refrigerated recovery unit 35, requiring no external refrigeration for condensation and demethanization of ethylene plus hydrocarbons in its bottom stream 39, consequently also requires relatively little capital investment due to its significantly reduced size. In illustration, the flow rate of feed, on a molar basis, to auto refrigerated recovery unit 35 is 48% of the flow rate to demethanizing absorber column 29 in Example 2 and 31% in Example 3. However, a refrigerant no lower than -55°C may be utilized within the auto refrigerated recovery unit 35 if doing so will reduce the overall circulation rate of solvent required for absorbing ethylene plus hydrocarbons through the demethanizing absorber unit 29.

For cracked gases, auto refrigeration is achieved through the use of turbo expanders which in turn provide chilling for demethanization and recovery of 1-25% of unrecovered ethylene through demethanizing absorber 29. When FCC refinery off-gases are fed to demethanizing absorber column 29, the turbo expanders in auto refrigerated recovery unit 35 are replaced by pressure let-down valves to achieve the Joule-Thompson effect while limiting the chilling to a temperature no lower than - 110°C. This limitation ensures the safety aspects of the process, particularly by preventing the condensation of nitrogen oxides to form NOₓ within the system.

Most refinery off-gases contain nitrogen which is generally not present in a cracked gas stream. When nitrogen is present in the feed to the demethanizing absorber column 29, the hydrogen purity of stream 40 is limited by the nitrogen content of the feed since the process of this invention does not separate nitrogen from hydrogen.

Since most of the refinery off-gases are used as fuel within a refinery, these gases generally are at lower pressures consistent with the pressure within the fuel gas system. Depending upon the desired recovery of hydrogen in addition to the recovery of olefins and the required pressure of the hydrogen, it may not be necessary to compress the FCC gases. Accordingly, a simple deethanizer or a depropanizer without a heat-pumped overhead system may be utilized. If these gases do not contain acetylene, the overhead gases may directly flow into the demethanizing absorber column 29.

## Claims

1. A process for recovering ethylene from a hydrocarbon gas stream 27 which is comprised of hydrogen, methane, ethylene and ethane, and is essentially devoid of C₄+ hydrocarbons, acetylenes, diolefins and water, fed to a demethanizing absorber column 29 employing a hydrocarbon solvent to produce an overhead gas stream 31 containing methane and minor quantities of ethylene and a bottom solvent stream 33 rich in ethylene-and-heavier hydrocarbons, said overhead gas stream 31 being separated by an auto refrigerated recovery unit 35, wherein auto refrigeration is achieved through use of turbo expanders or pressure let-down valves followed by demethanization utilizing a demethanizer column, to produce a C₂-plus stream 39, a recovered solvent stream 32 and a fuel gas stream 37, and said bottom rich solvent stream 33 being separated by a solvent regenerator column 53 to produce a demethanized ethylene-and-heavier overhead stream 55 and a lean solvent stream 57 for recycling to said demethanizing absorber column 29, said process requiring no external refrigeration to a temperature below -55°C, said process comprising:
A. selecting said hydrocarbon solvent from the group consisting of:
(1) paraffinic hydrocarbons having 4 to 10 carbon atoms,
(2) naphthenic hydrocarbons having 4 to 10 carbon atoms,
(3) aromatic hydrocarbons, selected from the group consisting of benzene, toluene, C₈-C₁₀ aromatic compounds having methyl, ethyl or propyl aliphatic groups specifically o-xylene, m-xylene, p-xylene, hemimellitene, pseudocumene, mesitylene, cumene, o-ethyltoluene, m-ethyltoluene, p-ethyltoluene, n-propylbenzene, isopropylbenzene, indane, durene, isodurene, prehnitene, crude xylenes, toluene transalkylation reaction effluents, extracted C₉ naphtha reformates, C₉ heart cuts of said reformates which are enriched in C₉ alkylbenzenes, C₇-C₉ alkyl aromatics, and mixtures thereof, and
(4) mixtures of said paraffinic hydrocarbons, said naphthenic hydrocarbons, and/or said aromatic hydrocarbons;
B. intercooling and interreboiling said demethanizing absorber column 29 and adjusting the lean solvent circulation rate thereto to absorb 75% to 99% of said ethylene present in said hydrocarbon gas stream 27 into said rich solvent stream 33; and
C. utilizing said demethanizer column within said auto refrigerated recovery unit 35 for:
(1) recovering 1% to 25% of said ethylene present in said hydrocarbon gas stream 27 as a component of said C₂-plus stream 39, and
(2) producing said fuel gas stream 37 to contain as low as 0.1% of said ethylene present in said hydrocarbon gas stream 27.

2. The process of claim 1, wherein excess solvent present in said overhead gas stream 31 is recovered in said auto refrigerated recovery unit 35.

3. The process of claim 1 or 2, wherein said demethanized ethylene-and-heavier overhead gas stream 55 is combined with said C₂-plus stream 39 to produce a combined ethylene-rich stream 42 that is fed to a deethanizer column 41 to produce a bottom stream 45 of propylene and heavier hydrocarbons and an overhead stream 43 of ethylene and ethane.

4. The process of claim 3, wherein said overhead stream 43 of ethylene and ethane is fed to a C₂ splitter column 47 to produce a bottom stream 51 of ethane and an overhead stream 49 of ethylene that amounts to at least 99% of said ethylene in said hydrocarbon gas stream 27.

5. The process of claim 1 or 2, wherein said hydrocarbon gas stream 27 and said overhead gas stream 31 from said demethanizing absorber column 29 additionally contain hydrogen.

6. The process of claim 5, wherein, when recovery of up to 50% of said hydrogen in said hydrocarbon gas stream 27 is desirable, said overhead gas stream 31 is selectively split into a hydrogen portion stream 34 and a fuel portion stream 36, said hydrogen portion stream 34 being fed to a methane absorber column 30 and said fuel portion stream 36 being fed to said auto refrigerated recovery unit 35.

7. The process of claim 6, wherein said methane absorber column 30 produces an overhead hydrogen stream 40, containing said up to 50% of said hydrogen in said hydrocarbon gas stream 27, and a bottom rich solvent stream 38 which is fed to said demethanizing absorber column 29.

8. The process of claim 7, wherein said bottom lean solvent stream 57 from said solvent regenerator column 53 is selectively split into a methane portion stream 59 and an ethylene portion stream 58, said ethylene portion stream 58 being fed to said demethanizing absorber column 29 and said methane portion stream 59 being fed to said methane absorber column 30.

9. The process of claim 5, wherein, when recovery of 20% to 100% of said hydrogen in said hydrocarbon gas stream 27 is desirable, said overhead gas stream 31 from said demethanizing absorber column 29 is fed to a methane absorber column 30 which produces a hydrogen stream 40, containing said 20% to 100% of said hydrogen in said hydrocarbon gas stream 27, and a bottom rich solvent stream 38.

10. The process of claim 9, wherein said bottom rich solvent stream 38 from said methane absorber column 30 is selectively split into an absorber portion stream 48 and a stripper portion stream 46, said absorber portion stream 48 being fed to said demethanizing absorber column 29 and said stripper portion stream 46 being fed to a methane stripper column 60.

11. The process of claim 10, wherein said methane stripper column 60 produces a bottom solvent stream 62 which is recycled to said methane absorber column 30 and an overhead stream 61 which is fed to said auto refrigerated recovery unit 35.

12. The process of claims 6, 8, and 10, wherein said selective splits form a means for shifting an entire plant to recovering said desirable percentage of hydrogen, while changing only the composition of said fuel gas stream 37 and without affecting the production and composition of said combined ethylene-rich stream 42.

13. The process of claim 1 or 2, wherein a cooled, sweetened, and compressed hydrocarbon gas stream 11, containing hydrogen, methane, ethylene, ethane, acetylene, and the C₃ and heavier hydrocarbons characteristic of an ethylene plant cracked gas stream and/or a refinery off-gas stream, is treated to form said hydrocarbon gas stream 27.

14. The process of claim 13, wherein said cooled, sweetened, and compressed hydrocarbon gas stream 11 is treated by a heat-pumped depropanizer column 13 which is coupled with a front-end selective catalytic acetylene hydrogenation reactor system 18 to produce a C₃-and-lighter overhead stream that is fed to said demethanizing absorber column 29 as said hydrocarbon gas stream 27.

15. The process of claim 13, wherein said cooled, sweetened, and compressed hydrocarbon gas stream 11 is treated by a heat-pumped deethanizer column 13 which is coupled with a front-end selective catalytic acetylene hydrogenation reactor system 18 to produce a C₂-and-lighter overhead stream that is fed to said demethanizing absorber column 29 as said hydrocarbon gas stream 27.

16. The process of claim 15, wherein said C₂-plus stream 39 from said auto refrigerated recovery unit 35 is combined with said overhead stream 55 from said solvent regenerator column 53 to produce a combined ethylene-rich stream 42 that is fed to a C₂ splitter column 47 to produce a bottom stream 51 of ethane and an overhead stream 49 of ethylene that amounts to at least 99% of said ethylene in said hydrocarbon gas stream 27.

17. The process of claim 13, wherein:
A. said cooled, sweetened, and compressed hydrocarbon gas stream 27 is a cracked gas stream; and
B. auto refrigeration is achieved through use of turbo expanders which in turn provide chilling for demethanization and recovery of said up to 25% of said ethylene present in said hydrocarbon gas stream 27 as said C₂-plus stream 39.

18. The process of claim 13, wherein:
A. said cooled, sweetened, and compressed hydrocarbon gas stream 11 is an FCC refinery off-gas stream that additionally contains nitrogen; and
B. auto refrigeration is provided through use of pressure let-down valves which in turn provide chilling to achieve the Joule-Thompson effect while limiting said chilling to a temperature no lower than -110°C, whereby nitrogen oxides are prevented from condensing.

19. The process of claim 1 or 2, wherein a cooled, sweetened, and compressed hydrocarbon gas stream 11, containing hydrogen, methane, ethylene, ethane, and the C₃ and heavier hydrocarbons characteristic of a refinery off-gas stream containing nitrogen but essentially no C₂ acetylene, is treated by a deethanizer column without catalytic hydrogenation to produce a C₂-and-lighter overhead stream that is fed to said demethanizing absorber column 29 as said hydrocarbon gas stream 27.

20. The process of claim 1 or 2, wherein a cooled, sweetened, and compressed hydrocarbon gas stream 11, containing hydrogen, methane, ethylene, ethane, and the C₃ and heavier hydrocarbons characteristic of a refinery off-gas containing nitrogen but essentially no C₂ acetylene, is treated by a depropanizer column without catalytic hydrogenation to produce a C₃-and-lighter overhead stream that is fed to said demethanizing absorber column 29 as said hydrocarbon gas stream 27.

21. The process of claims 19 or 20, wherein said deethanizer column operates as a heat-pumped deethanizer column and said depropanizer column operates as a heat-pumped depropanizer column.

22. The process of claim 1 or 2, wherein said external refrigeration is not required in said auto refrigerated recovery unit 35.

23. The process of claim 7, wherein said solvent circulates as a single solvent loop, the circulation rate of which is determined by the C₂₊ content of said hydrocarbon gas stream 27.

24. The process of claim 11, wherein said solvent circulates as two solvent loops that comprise a minor solvent loop circulating through said methane absorber column 30, said demethanizing absorber column 29, and said solvent regenerator column 53 and a major solvent loop circulating through said methane stripper column 60 and said methane absorber column 30, the circulation rate of said minor solvent circulation loop being determined by the C₂-and-heavier content of said hydrocarbon gas stream 27 and the circulation rate of said major solvent circulation loop being determined by subtracting the flow rate of said bottom lean solvent stream 57 produced by said solvent regenerator column 53 from the total solvent circulation rate required to absorb the contained methane in said overhead gas stream 31 produced by said demethanizing absorber column 29.

## Patentansprüche

1. Verfahren zur Gewinnung von Ethylen aus einem Kohlenwasserstoffgasstrom 27, der aus Wasserstoff, Methan, Ethylen und Ethan besteht und im wesentlichen frei von C₄+-Kohlenwasserstoffen, Acetylenen, Diolefinen und Wasser ist und in eine Entmethanisierungs-Absorberkolonne 29 unter Verwendung eines Kohlenwasserstofflösemittels unter Bildung eines Kopfgasstroms 31 mit einem Gehalt an Methan und untergeordneten Mengen an Ethylen und eines Boden-Lösemittelstroms 33, der reich an Ethylen und schwereren Kohlenwasserstoffen ist, eingespeist wird, wobei der Überkopfgasstrom 31 durch eine selbstgekühlte Gewinnungseinheit 35, in der eine Selbstkühlung durch Verwendung von Turboexpandern oder Druckentspannungsventilen erreicht wird, getrennt und anschließend unter Verwendung einer Entmethanisierungskolonne entmethanisiert wird, wodurch ein C₂+-Strom 39, ein rückgewonnener Lösemittelstrom 32 und ein Brenngasstrom 37 gebildet werden, und wobei der fette Lösemittel-Bodenstrom durch eine Lösemittel-Regeneratorkolonne 53 unter Bildung eines entmethanisierten Kopfstroms 55 aus Ethylen und schwereren Produkten und eines mageren Lösemittelstroms 57 zur Rückführung in die Entmethanisierungs-Absorberkolonne 29 getrennt werden, wobei das Verfahren keine externe Kühlung auf eine Temperatur unter -55°C erfordert, wobei das Verfahren folgendes umfaßt:
A. Auswählen des Kohlenwasserstofflösemittels aus folgender Gruppe:
(1) paraffinische Kohlenwasserstoffe mit 4 bis 10 Kohlenstoffatomen,
(2) naphthenische Kohlenwasserstoffe mit 4 bis 10 Kohlenstoffatomen,
(3) aromatische Kohlenwasserstoffe aus der Gruppe Benzol, Toluol, C₈-C₁₀-aromatische Verbindungen mit den aliphatischen Gruppen Methyl, Ethyl oder Propyl, insbesondere o-Xylol, m-Xylol, p-Xylol, Hemimellitol, Pseudocumol, Mesitylen, Cumol, o-Ethyltoluol, m-Ethyltoluol, p-Ethyltoluol, n-Propylbenzol, Isopropylbenzol, Indan, Durol, Isodurol, Prehnitol, rohe Xylole, ausströmende Produkte der Toluol-Transalkylierungsreaktion, extrahierte C₉-Naphthareformate, C₉-Mittelfraktionen der Reformate, die an C₉-Alkylbenzolen, C₇-C₉-Alkylaromaten und Gemischen davon angereichert sind,
(4) sowie Gemische der paraffinischen Kohlenwasserstoffe, der naphthenischen Kohlenwasserstoffe und/oder der aromatischen Kohlenwasserstoffe.
B. Zwischenkühlen und Zwischenaufkochen der Entmethanisierungs-Absorberkolonne 29 und Einstellen der Kreislaufrate des mageren Lösemittels zur Gewährleistung einer Absorption von 75 bis 99% des im Kohlenwasserstoffgasstrom 27 enthaltenen Ethylens unter Bildung des fetten Lösemittelstroms 33; und
C. Einsetzen der Entmethanisierungskolonne innerhalb der selbstgekühlten Gewinnungseinheit 35 zur:
(1) Gewinnung von 1 bis 25% des im Kohlenwasserstoffgasstroms 27 vorhandenen Ethylens als eine Komponente des C₂+-Stroms 39 und
(2) Bildung des Brenngasstroms 37, der nur 0,1% des im Kohlenwasserstoffgasstrom 27 enthaltenen Ethylens enthält.

2. Verfahren nach Anspruch 1, wobei das im Kopfgasstrom 31 vorhandene'überschüssige Lösemittel in der selbstgekühlten Gewinnungseinheit 35 gewonnen wird.

3. Verfahren nach Anspruch 1 oder 2, wobei der entmethanisierte Kopfgasstrom 55 aus Ethylen und schwereren Produkten mit dem C₂+-Strom 39 unter Bildung eines vereinigten, an Ethylen reichen Stroms 42 vereinigt wird, der dann in eine Entethanisierungskolonne 41 zur Bildung eines Bodenstroms 45 aus Propylen und schwereren Kohlenwasserstoffen und eines Kopfstroms 43 aus Ethylen und Ethan eingespeist wird.

4. Verfahren nach Anspruch 3, wobei der Kopfstrom 43 aus Ethylen und Ethan in eine C₂-Splitterkolonne 47 unter Bildung eines Bodenstroms 51 aus Ethan und eines Kopfstroms 49 aus Ethylen, das mindestens 99% des Ethylens im Kohlenwasserstoffgasstrom 27 ausmacht, eingespeist wird.

5. Verfahren nach Anspruch 1 oder 2, wobei der Kohlenwasserstoffgasstrom 27 und der Kopfgasstrom 31 aus der Entmethanisierungs-Absorberkolonne 29 zusätzlich Wasserstoff enthalten.

6. Verfahren nach Anspruch 5, wobei dann, wenn eine Gewinnung bis zu 50% des Wasserstoffs im Kohlenwasserstoffgasstrom 27 erwünscht ist, der Kopfgasstrom 31 selektiv in einen Wasserstoffteilstrom 34 und in einen Brennstoffteilstrom 36 aufgeteilt wird, wobei der Wasserstoffteilstrom 34 in eine Methanabsorberkolonne 30 und der Brenngasstrom 36 in die selbstgekühlte Gewinnungseinheit 35 eingespeist werden.

7. Verfahren nach Anspruch 6, wobei die Methanabsorberkolonne 30 einen Wasserstoff-Kopfstrom 40, der bis zu 50% des Wasserstoffs im Kohlenwasserstoffgasstrom 27 enthält, und einen fetten Lösemittel-Bodenstrom 38 bildet, der in die Entmethanisierungs-Absorberkolonne 29 eingespeist wird.

8. Verfahren nach Anspruch 7, wobei der magere Lösemittel-Bodenstrom 57 aus der Lösemittel-Regeneratorkolonne 53 selektiv in einen Methanteilstrom 59 und einen Ethylenteilstrom 58 aufgespalten wird, wobei der Ethylenteilstrom 58 in die Entmethanisierungs-Absorberkolonne 29 und der Methanteilstrom 59 in die Methanabsorberkolonne 30 eingespeist werden.

9. Verfahren nach Anspruch 5, wobei dann, wenn eine Gewinnung von 20 bis 100% des im Kohlenwasserstoffgasstrom 27 enthaltenen Wasserstoffs erwünscht ist, der Kopfgasstrom 31 aus der Entmethanisierungs-Absorberkolonne 29 in eine Methanabsorberkolonne 30 eingespeist wird, die einen Wasserstoffstrom 40 mit einem Gehalt an 20 bis 100% des im Kohlenwasserstoffgasstrom 27 enthaltenen Wasserstoffs und einen fetten Lösemittel-Bodenstrom 38 bildet.

10. Verfahren nach Anspruch 9, wobei der fette Lösemittel-Bodenstrom 38 aus der Methanabsorberkolonne 30 selektiv in einen Absorberteilstrom 48 und einen Stripperteilstrom 46 aufgeteilt wird, wobei der Absorberteilstrom 48 in die Entmethanisierungs-Absorberkolonne 29 und der Stripperteilstrom 46 in eine Methanstripperkolonne 60 eingespeist werden.

11. Verfahren nach Anspruch 10, wobei die Methanstripperkolonne 60 einen Lösemittel-Bodenstrom 62, der in die Methanabsorberkolonne 30 zurückgeführt wird, und einen Überkopfstrom 61, der in die selbstgekühlte Gewinnungseinheit 35 eingespeist wird, bildet.

12. Verfahren nach den Ansprüchen 6, 8 und 10, wobei die selektiven Aufteilungen eine Maßnahme zum Verschieben einer gesamten Anlage zur Gewinnung des gewünschten prozentualen Anteils an Wasserstoff darstellen, wobei sich nur die Zusammensetzung des Brenngasstroms 37 ändert, ohne daß die Bildung und die Zusammensetzung des vereinigten, an Ethylen reichen Stroms 42 beeinflußt werden.

13. Verfahren nach Anspruch 1 oder 2, wobei ein gekühlter, entschwefelter und komprimierter Kohlenwasserstoffgasstrom 11, der Wasserstoff, Methan, Ethylen, Ethan, Acetylen sowie C₃- und schwerere Kohlenwasserstoffe enthält, die für einen Ethylenanlagen-Crackgasstrom und/oder einen Raffinerieabgasstrom charakteristisch sind, unter Bildung des Kohlenwasserstoffgasstroms 27 behandelt wird.

14. verfahren nach Anspruch 13, wobei der gekühlte, entschwefelte und komprimierte Kohlenwasserstoffgasstrom 11 mit einer Wärmepumpen-Entpropanisierungskolonne 13 behandelt wird, die mit einem vorgeschalteten, selektiven, katalytischen Acetylen-Hydrierungsreaktorsystem 18 unter Bildung eines Kopfstroms mit C₃- und leichteren Produkten, der in die Entmethanisierungs-Absorberkolonne 29 als Kohlenwasserstoffgasstrom 27 eingespeist wird, gekoppelt ist.

15. Verfahren nach Anspruch 13, wobei der gekühlte, entschwefelte und komprimierte Kohlenwasserstoffgasstrom 11 durch eine WärmepumpenEntethanisierungskolonne 13 behandelt wird, die mit einem vorgeschalteten, selektiven, katalytischen Acetylen-Hydrierungsreaktorsystem 18 unter Bildung eines Kopfstroms mit C₂- und leichteren Produkten, der in die Entmethanisierungs-Absorberkolonne 29 als Kohlenwasserstoffgasstrom 27 eingespeist wird, gekoppelt ist.

16. Verfahren nach Anspruch 15, wobei der C₂+-Strom 39 aus der selbstgekühlten Gewinnungseinheit 35 innerhalb des Kopfstroms 55 aus der Lösemittel-Regeneratorkolonne 53 vereinigt wird, wodurch ein vereinigter, an Ethylen reicher Strom 42 gebildet wird, der in eine C₂-Splitterkolonne 47 eingespeist wird, wodurch ein Bodenstrom 51 aus Ethan und ein Kopfstrom 49 aus Ethylen, das mindestens 99% des Ethylens im Kohlenwasserstoffgasstrom 27 ausmacht, gebildet wird.

17. Verfahren nach Anspruch 13, wobei:
A. es sich beim gekühlten, entschwefelten und komprimierten Kohlenwasserstoffgasstrom 27 um einen gecrackten Gasstrom handelt; und
B. die Selbstkühlung durch Verwendung von Turboexpandern erreicht wird, die ihrerseits eine Kühlung für die Entmethanisierung und eine Gewinnung bis zu 25% des im Kohlenwasserstoffgasstrom 27 vorhandenen Ethylens als C₂+-Strom 39 gewährleisten.

18. Verfahren nach Anspruch 13, wobei:
A. es sich beim gekühlten, entschwefelten und komprimierten Kohlenwasserstoffgasstrom 11 um einen FCC-Raffinerieabgasstrom handelt, der zusätzlich Stickstoff enthält, und
B. die Selbstkühlung durch Verwendung von Druckentspannungsventilen gewährleistet wird, die ihrerseits eine Kühlung unter Erzielung des Joule-Thompson-Effekts gewährleisten, wobei die Kühlung auf eine Temperatur von nicht unter -110°C begrenzt wird, wodurch die Kondensation von Stickoxiden verhindert wird.

19. Verfahren nach Anspruch 1 oder 2, wobei ein gekühlter, entschwefelter und komprimierter Kohlenwasserstoffgasstrom 11, der Wasserstoff, Methan, Ethylen, Ethan und C₃- und schwerere Kohlenwasserstoffe enthält, die für einen Raffinerieabgasstrom, der Stickstoff aber im wesentlichen kein C₂-Acetylen enthält, charakteristisch sind, mit einer Entethanisierungskolonne ohne katalytische Hydrierung behandelt wird, wodurch ein Kopfstrom mit C₂- und leichteren Produkten gebildet wird, der in die Entmethanisierungs-Absorberkolonne 29 als Kohlenwasserstoffgasstrom 27 eingespeist wird.

20. Verfahren nach Anspruch 1 oder 2, wobei ein gekühlter, entschwefelter und komprimierter Kohlenwasserstoffgasstrom 11, der Wasserstoff, Methan, Ethylen, Ethan und die C₃- und schwereren Kohlenwasserstoffe enthält, die für einen Raffinerieabgasstrom, der Stickstoff, aber im wesentlichen kein C₂-Acetylen enthält, charakteristisch sind, mit einer Entpropanisierungskolonne ohne katalytische Hydrierung unter Bildung eines Kopfstroms mit C₃- und leichteren Produkten, der in die Entmethanisierungs-Absorberkolonne 29 als Kohlenwaserstoffgasstrom 27 eingespeist wird, behandelt wird.

21. Verfahren nach Anspruch 19 oder 20, wobei die Entethanisierungskolonne als Wärmepumpen-Entethanisierungskolonne und die Entpropanisierungskolonne als Wärmepumpen-Entpropanisierungskolonne betrieben werden.

22. Verfahren nach Anspruch 1 oder 2, wobei die externe Kühlung in der selbstgekühlten Gewinnungseinheit 35 nicht erforderlich ist.

23. Verfahren nach Anspruch 7, wobei das Lösemittel in Form einer einzelnen Lösemittelschleife im Kreislauf geführt wird, wobei die Kreislaufrate durch den C₂+-Gehalt des Kohlenwasserstoffgasstroms 27 festgelegt wird.

24. Verfahren nach Anspruch 11, wobei das Lösemittel in Form von zwei Lösemittelschleifen im Kreislauf geführt wird, die eine Neben-Lösemittelschleife unter Zirkulation durch die Methanabsorberkolonne 30, die Entmethanisierungs-Absorberkolonne 29 und die Lösemittel-Regeneratorkolonne 53 und eine Haupt-Lösemittelschleife unter Zirkulation durch die Methanstripperkolonne 60 und die Methanabsorberkolonne 30 umfaßt, wobei die Kreislaufrate der Neben-Lösemittelzirkulationsschleife durch den Anteil an C₂- und schwereren Produkten des Kohlenwasserstoffgasstroms 27 festgelegt wird und die Kreislaufrate der Haupt-Lösemittelzirkulationsschleife durch Subtraktion der Fließrate des mageren Lösemittel-Bodenstroms 57, der von der Lösemittel-Regeneratorkolonne 53 gebildet wird, von der gesamten Lösemittelkreislaufrate, die zur Absorption des Methans, das im durch die Entmethanisierungs-Absorberkolonne 29 gebildeten Kopfgasstrom 31 enthalten ist, erforderlich ist, festgelegt wird.

## Revendications

1. Procédé pour récupérer de l'éthylène à partir d'un flux d'hydrocarbures gazeux (27) qui est constitué d'hydrogène, méthane, éthylène et éthane et pratiquement exempt d'hydrocarbures du type C₄⁺, d'acétylène, de dioléfines et d'eau, envoyé vers une colonne d'absorption déméthanisante (29) utilisant un solvant d'hydrocarbure pour produire un flux de gaz de tête (31) contenant du méthane et des quantités mineures d'éthylène et un flux de solvant de pied (33) riche en hydrocarbures du type éthylène et plus lourds, ledit flux de gaz de tête (31) étant séparé par un ensemble de récupération auto-réfrigéré (35) dans lequel l'auto-réfrigération est obtenue par l'utilisation de turbo-expanseurs ou de soupapes d'abaissement de pression, ceci étant suivi d'une déméthanisation utilisant une colonne de déméthanisation, pour produire un flux de C₂-plus (39), un flux de solvant récupéré (32) et un flux de gaz combustible (37), et ledit flux de pied de solvant riche (33) étant séparé par une colonne de régénération de solvant (53) pour produire un flux de tête déméthanisé d'éthylène et d'hydrocarbures plus lourds (55) et un flux de solvant propre (57) destiné à être recyclé vers ladite colonne d'absorption déméthanisante (29), ledit procédé ne nécessitant pas de réfrigération extérieure jusqu'à une température située en dessous de -55°C, ledit procédé consistant à :
A. choisir ledit solvant d'hydrocarbure parmi le groupe constitué :
(1) d'hydrocarbures paraffiniques ayant 4 à 10 atomes de carbone,
(2) d'hydrocarbures naphténiques ayant 4 à 10 atomes de carbone,
(3) d'hydrocarbures aromatiques, choisis parmi le groupe constitué du benzène, du toluène, de composés aromatiques C₈ à C₁₀ ayant des groupes aliphatiques méthyle, éthyle ou propyle constituant de manière spécifique o-xylène, m-xylène, p-xylène, hémimellitène, pseudocumène, mésitylène, cumène, o-éthyltoluène, m-éthyltoluène, p-éthyltoluène, n-propylbenzène, isopropylbenzène, indane, durène, isodurène, prehnitène, xylènes bruts, effluents de la réaction de transalkylation du toluène, réformats de naphta C₉ extraits, fractions de coeur C₉ desdits réformats qui sont enrichies en alkylbenzènes C₉, en aromatiques alkyles C₇ à C₉, et en mélanges ceux-ci, et
(4) des mélanges desdits hydrocarbures paraffiniques, desdits hydrocarbures naphténiques, et/ou desdits hydrocarbures aromatiques ;
B. effectuer un refroidissement intermédiaire et une ébullition intermédiaire de ladite colonne d'absorption déméthanisante (29) et ajuster la vitesse de circulation du solvant propre vers celle-ci pour absorber 75 % à 99 % dudit éthylène présent dans ledit flux d'hydrocarbures gazeux (27) à l'intérieur dudit flux de solvant riche (33), et
C. utiliser ladite colonne de déméthanisation existant dans ledit ensemble de récupération auto-réfrigéré (35) pour :
(1) récupérer de 1 à 25 % dudit éthylène présent dans ledit flux d'hydrocarbures gazeux (27) en tant que constituant dudit flux de C₂-plus (39), et
(2) produire ledit flux de gaz combustible (37) pour contenir aussi peu que 0,1 % dudit éthylène présent dans ledit flux d'hydrocarbures gazeux (27).

2. Procédé selon la revendication 1, dans lequel le solvant en excès présent dans ledit flux de gaz de tête (31) est récupéré dans ledit ensemble de récupération auto-réfrigéré (35).

3. Procédé selon la revendication 1 ou 2, dans lequel ledit flux de gaz de tête déméthanisé (55) d'éthylène et d'hydrocarbures plus lourds est combiné avec ledit flux de C₂-plus (39) pour produire un flux combiné riche en éthylène (42) qui est envoyé vers une colonne de dééthanisation (41) pour produire un flux de pied (45) constitué de propylène et d'hydrocarbures plus lourds et un flux de tête (43) constitué d'éthylène et d'éthane.

4. Procédé selon la revendication 3, dans lequel ledit flux de tête (43) constitué d'éthylène et d'éthane est envoyé vers une colonne de fractionnement des C₂ (47) pour produire un flux de pied (51) constitué d'éthane et un flux de tête (49) constitué d'éthylène qui atteint au moins 99 % dudit éthylène existant dans ledit flux d'hydrocarbures gazeux (27).

5. Procédé selon la revendication 1 ou 2, dans lequel ledit flux d'hydrocarbures gazeux (27) et ledit flux de gaz de tête (31) provenant de ladite colonne d'absorption déméthanisante (29) contient de plus de l'hydrogène.

6. Procédé selon la revendication 5, dans lequel lorsqu'une récupération allant jusqu'à 50 % dudit hydrogène existant dans ledit flux d'hydrocarbures gazeux (27) est souhaitable, ledit flux de gaz de tête (31) est séparé de manière sélective en un flux de partie hydrogène (34) et un flux de partie combustible (36), ledit flux de partie hydrogène (34) étant envoyé vers une colonne d'absorption du méthane (30) et ledit flux de partie combustible (36) étant envoyé vers ledit ensemble de récupération auto-réfrigéré (35).

7. Procédé selon la revendication 6, dans lequel ladite colonne d'absorbeur du méthane (30) produit un flux d'hydrogène de tête (40), contenant lesdits jusqu'à 50 % dudit hydrogène existant dans ledit flux d'hydrocarbures gazeux (27), et un flux de pied de solvant riche (38) qui est envoyé vers ladite colonne d'absorption déméthanisante (29).

8. Procédé selon la revendication 7, dans lequel ledit flux de pied de solvant propre (57) provenant de ladite colonne de régénération de solvant (53) est séparé de manière sélective en flux de partie de méthane (59) et en flux de partie éthylène (58), ledit flux de partie éthylène (58) étant envoyé vers ladite colonne d'absorption déméthanisante (29) et ledit flux de partie méthane (59) étant envoyé vers ladite colonne d'absorption du méthane (30).

9. Procédé selon la revendication 5, dans lequel, lorsqu'une récupération de 20 à 100 % dudit hydrogène existant dans ledit flux d'hydrocarbures gazeux (27) est souhaitable, ledit flux de gaz de tête (31) provenant de ladite colonne d'absorption déméthanisante (29) est envoyé vers une colonne d'absorption du méthane (30) qui produit un flux d'hydrogène (40), contenant lesdits 20 % à 100 % dudit hydrogène existant dans ledit flux d'hydrocarbures gazeux (27), et un flux de pied de solvant riche (38).

10. Procédé selon la revendication 9, dans lequel ledit flux de pied de solvant riche (38) provenant de ladite colonne d'absorption du méthane (30) est séparé de manière sélective en un flux de partie d'absorption (48) et un flux de partie de rectification (46), ledit flux de partie d'absorption (48) étant envoyé vers ladite colonne d'absorption déméthanisante (29) et ledit flux de partie de rectification (46) étant envoyé vers une colonne de rectification du méthane (60).

11. Procédé selon la revendication 10, dans lequel ladite colonne de rectification du méthane (60) produit un flux de pied de solvant (62) qui est recyclé vers ladite colonne d'absorption du méthane (30) et un flux de tête (61) qui est envoyé vers ledit ensemble de récupération auto-réfrigéré (35).

12. Procédé selon les revendications 6, 8 et 10, dans lequel lesdits fractionnements sélectifs forment des moyens pour changer une installation complète pour récupérer ledit pourcentage souhaitable d'hydrogène, tout en ne modifiant que la composition dudit flux de gaz combustible (37) et sans affecter la production ni la composition dudit flux combiné riche en éthylène (42).

13. Procédé selon la revendication 1 ou 2, dans lequel un flux d'hydrocarbures gazeux (11) refroidi, assaini et comprimé, contenant de l'hydrogène, du méthane, de l'éthylène, de l'éthane, de l'acétylène et des hydrocarbures C₃ et plus lourds, caractéristique d'un flux de gaz craqué d'usine d'éthylène et/ou d'un flux perdu de raffinerie, est traité pour former ledit flux d'hydrocarbures gazeux (27).

14. Procédé selon la revendication 13, dans lequel ledit flux d'hydrocarbures gazeux (11) refroidi, assaini et comprimé est traité par une colonne de séparation de propane pompé à chaud (13) qui est reliée à un système de réacteur sélectif de la fraction de tête (18) d'hydrogénation catalytique de l'acétylène pour produire un flux de tête de C₃ et d'hydrocarbures plus légers, qui est envoyé vers ladite colonne d'absorption déméthanisante (29) en tant que dit flux d'hydrocarbures gazeux (27).

15. Procédé selon la revendication 13, dans lequel ledit flux d'hydrocarbures gazeux (11) refroidi, assaini et comprimé est traité par une colonne de séparation de propane pompé à chaud (13) qui est reliée à un système (18) de réacteur sélectif de la fraction de tête d'hydrogénation catalytique pour produire un flux de tête de C₂ et d'hydrocarbures plus légers, qui est envoyé vers ladite colonne d'absorption déméthanisante (29) en tant que dit flux d'hydrocarbures gazeux (27).

16. Procédé selon la revendication 15, dans lequel ledit flux de C₂-plus (39) provenant dudit ensemble de récupération auto-réfrigéré (35) est combiné avec ledit flux de tête (55) provenant de ladite colonne de régénération du solvant (53) pour produire un flux combiné riche en éthylène (42) qui est envoyé vers une colonne de fractionnement de C₂ (47) pour produire un flux de pied (51) constitué d'éthane et un flux de tête (49) constitué d'éthylène qui atteint au moins 99 % dudit éthylène existant dans ledit flux d'hydrocarbures gazeux (27).

17. Procédé selon la revendication 13, dans lequel :
A. ledit flux d'hydrocarbures gazeux (27) refroidi, assaini et comprimé est un flux de gaz craqué et
B. l'auto-réfrigération est obtenue par l'utilisation de turbo-expanseurs qui à leur tour assurent le refroidissement brusque destiné à la déméthanisation et la récupération desdits jusqu'à 25 % dudit éthylène présent dans ledit flux d'hydrocarbures gazeux (27) sous forme dudit flux de C₂-plus (39).

18. Procédé selon la revendication 13, dans lequel :
A. ledit flux d'hydrocarbures gazeux (11) refroidi, assaini et comprimé est un flux de gaz perdu de raffinerie FCC qui contient de manière supplémentaire de l'azote, et
B. l'auto-réfrigération est assurée par l'utilisation de soupapes de chute de pression qui à leur tour assurent le refroidissement brusque pour obtenir l'effet Joule-Thompson tout en limitant ledit refroidissement brusque à une température qui n'est pas plus faible que -110°C, de sorte que les oxydes d'azote ne peuvent condenser.

19. Procédé selon la revendication 1 ou 2, dans lequel un flux d'hydrocarbures gazeux (11) refroidi, assaini et comprimé, contenant de l'hydrogène, du méthane, de l'éthylène, de l'éthane, et des hydrocarbures C₃ et plus lourds, caractéristique d'un flux de gaz perdu de raffinerie contenant de l'azote mais ne contenant pratiquement pas d'acétylène C₂, est traité par une colonne de séparation de l'éthane sans hydrogénation catalytique pour produire un flux de tête de C₂ et d'hydrocarbures plus légers qui est envoyé vers ladite colonne d'absorption déméthanisante (29) en tant que dit flux d'hydrocarbures gazeux (27).

20. Procédé selon la revendication 1 ou 2, dans lequel un flux d'hydrocarbure gazeux (11) refroidi, assaini et comprimé, contenant de l'hydrogène, du méthane, de l'éthylène, de l'éthane, et des hydrocarbures C₃ et plus lourds, caractéristique d'un gaz perdu de raffinerie contenant de l'azote mais ne contenant pratiquement pas d'acétylène C₂, est traité par une colonne de séparation du propane sans hydrogénation catalytique pour produire un flux de tête de C₃ et d'hydrocarbures plus légers qui est envoyé vers ladite colonne d'absorption déméthanisante (29) en tant que dit flux d'hydrocarbures gazeux (27).

21. Procédé selon la revendication 19 ou 20, dans lequel ladite colonne de dééthanisation agit en tant que colonne de séparation de l'éthane pompée à chaud et ladite colonne de séparation du propane agit en tant que colonne de séparation du propane pompée à chaud.

22. Procédé selon la revendication 1 ou 2, dans lequel ladite réfrigération extérieure n'est pas nécessaire dans ledit ensemble de récupération auto-réfrigéré (35).

23. Procédé selon la revendication 7, dans lequel ledit solvant circule sous forme d'une boucle unique de solvant, la vitesse de circulation de celui-ci étant déterminée par la teneur en C₂-plus dudit flux d'hydrocarbures gazeux (27).

24. Procédé selon la revendication 11, dans lequel ledit solvant circule sous forme de deux boucles de solvant qui comportent une boucle de solvant mineure circulant à travers ladite colonne d'absorption du méthane (30), ladite colonne d'absorption déméthanisante (29), et ladite colonne de régénération du solvant (53) et une boucle de solvant principale circulant à travers ladite colonne de séparation du méthane (60) et ladite colonne d'absorption du méthane (30), la vitesse de circulation de ladite boucle mineure de circulation de solvant étant déterminée par la teneur en C₂ et en hydrocarbures plus lourds dudit flux d'hydrocarbures gazeux (27) et la vitesse de rotation de ladite boucle principale de circulation de solvant étant déterminée en soustrayant le débit dudit flux de pied de solvant propre (57) produit par ladite colonne de régénération du solvant (53) de la vitesse de circulation totale du solvant nécessaire pour absorber le méthane contenu dans ledit flux de gaz de tête (31) produit par ladite colonne d'absorption déméthanisante (29).
